(19) Europäisches Patentamt
European Patent Office
Office européen des brevets

(11) **EP 4 697 583 A1**

(12) **EUROPEAN PATENT APPLICATION**
published in accordance with Art. 153(4) EPC

(43) Date of publication:
**18.02.2026 Bulletin 2026/08**

(21) Application number: **24831351.2**

(22) Date of filing: **25.03.2024**

(51) International Patent Classification (IPC):
***H02M 7/12*** *(2006.01)*

(52) Cooperative Patent Classification (CPC):
**H02M 7/12**

(86) International application number:
**PCT/JP2024/011531**

(87) International publication number:
**WO 2025/004474 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2023 JP 2023104783**

(71) Applicant: **Murata Manufacturing Co., Ltd.**
**Nagaokakyo-shi, Kyoto 617-8555 (JP)**

(72) Inventors:
- **ISHIKURA Yuki**
  **Nagaokakyo-shi, Kyoto 617-8555 (JP)**
- **BHAGAT Chinmay**
  **Nagaokakyo-shi, Kyoto 617-8555 (JP)**

(74) Representative: **Lorenz Seidler Gossel Part. mbB**
**Widenmayerstr. 23**
**80538 München (DE)**

# (54) POWER CONVERSION CIRCUIT AND POWER CONVERSION DEVICE

(57) A power conversion circuit (30) includes a controller (33). Where X° represents the phase at which a first voltage reaches the maximum, in a specific period predetermined within the period range in which the phase of the first voltage is greater than or equal to X° - 30° and less than or equal to X° and within the period range in which the phase of the first voltage is greater than or equal to X° + 180° and less than or equal to X° + 210°, or within the period range in which the phase of the first voltage is greater than or equal to X° and less than or equal to X° + 30° and within the period range in which the phase of the first voltage is greater than or equal to X° + 150° and less than or equal to X° + 180°, the controller (33) controls bidirectional switches (TSWs) so that a short-circuit current does not flow through an unintended path.

FIG. 1

12, 12A
C4
70
12, 12B
60
L5
53
54
50
51
41B
52
40
L4
41
41A
32, 32A
32, 32B
S25
SG25
S15
HS3
S22
SG22
SG12
S12
LS3
S23
SG23
SG13
S13
HS2
S26
SG26
SG16
S16
LS2
10
30
TSW
S21
SG21
SG11
S11
HS1
31, 31A
31, 31B
31, 31C
S24
SG24
SG14
S14
LS1
SG11~S16
SG21~S26
C3
C2
C1
33
L1
L2
L3
11, 11C
20
11, 11A
11, 11B
80

EP 4 697 583 A1

# Description

## Technical Field

The present disclosure relates to a power conversion circuit and a power conversion device.

## Background Art

A power conversion circuit disclosed in Patent Document 1 includes three input terminals, multiple switch devices, and a controller. The power conversion circuit is capable of converting three-phase AC power, which is received at the input terminals, to DC power through ON/OFF control on the switch devices. The controller performs ON/OFF control on the switch devices in accordance with the magnitude relationship between the three-phase voltages of the three-phase AC power.

## Citation List

### Patent Document

Patent Document 1: U.S. Patent Application Publication No. 2018/0262103

## Summary of Invention

### Technical Problem

In the power conversion circuit described in Patent Document 1, noise may be superimposed on the phase voltages. Noise superimposed on the phase voltages may cause a time of transposition of the magnitude relationship between the phase voltages to be shifted with respect to a time of transposition in the ideal state. This causes a time, at which the controller performs ON/OFF control on the switch devices, to be shifted with respect to the time of transposition of the magnitude relationship between the phase voltages, which may result in a current flowing through an unintended path.

### Solution to Problem

To solve the issue, an aspect of the present disclosure is a power conversion circuit comprising: a first input terminal, a second input terminal, and a third input terminal that are connected to a three-phase AC power supply, and that receive, on a one-to-one basis, a first voltage, a second voltage, and a third voltage which are AC voltages having phases different from one another; a first output terminal and a second output terminal that are capable of outputting AC power; a plurality of bidirectional switches; and a controller that controls each of the plurality of bidirectional switches. The plurality of bidirectional switches include a first high-side bidirectional switch that connects the first input terminal and the first output terminal, a first low-side bidirectional switch that connects the first input terminal and the second output terminal, a second high-side bidirectional switch that connects the second input terminal and the first output terminal, a second low-side bidirectional switch that connects the second input terminal and the second output terminal, a third high-side bidirectional switch that connects the third input terminal and the first output terminal, and a third low-side bidirectional switch that connects the third input terminal and the second output terminal. Where X° represents a phase at which the first voltage reaches a maximum, in a specific period determined within a period range in which the phase of the first voltage is greater than or equal to (X° - 30°) and less than or equal to X° and within a period range in which the phase of the first voltage is greater than or equal to (X° + 180°) and less than or equal to (X° + 210°), the controller controls the third low-side bidirectional switch and the second low-side bidirectional switch to switch ON/OFF states of the bidirectional switches without an overlap between a first state and a second state, the first state being a state in which the third low-side bidirectional switch allows a current to flow from the second output terminal to the third input terminal, the second state being a state in which the second low-side bidirectional switch allows a current to flow from the second input terminal to the second output terminal, and the controller controls the second high-side bidirectional switch and the third high-side bidirectional switch to switch the ON/OFF states of the bidirectional switches without an overlap between a third state and a fourth state, the third state being a state in which the second high-side bidirectional switch allows a current to flow from the second input terminal to the first output terminal, the fourth state being a state in which the third high-side bidirectional switch allows a current to flow from the first output terminal to the third input terminal.

An aspect of the present disclosure is a power conversion circuit comprising: a first input terminal, a second input terminal, and a third input terminal that are connected to a three-phase AC power supply, and that receive, on a one-to-one basis, a first voltage, a second voltage, and a third voltage which are AC voltages having phases different from one another; a first output terminal and a second output terminal that are capable of outputting AC power; a plurality of bidirectional switches; and a controller that controls each of the plurality of bidirectional switches. The plurality of bidirectional switches include a first high-side bidirectional switch that connects the first input terminal and the first output terminal, a first low-side bidirectional switch that connects the first input terminal and the second output terminal, a second high-side bidirectional switch that connects the second input terminal and the first output terminal, a second low-side bidirectional switch that connects the second input terminal and the second output terminal, a third high-side bidirectional switch that connects the third input terminal and the first output terminal, and a third low-side bidirectional switch that connects the third input terminal and the second output terminal. Where X° represents a phase at which the first voltage reaches a maximum, in a specific period predetermined within a period range in which the phase of the first voltage is greater than or equal to X° and less than or equal to (X° + 30°) and within a period range in which the phase of the first voltage is greater than or equal to (X° + 150°) and less than or equal to (X° + 180°), the controller controls the third low-side bidirectional switch and the second low-side bidirectional switch to switch ON/OFF states of the bidirectional switches without an overlap between a first state and a second state, the first state being a state in which the third low-side bidirectional switch allows a current to flow from the third input terminal to the second output terminal, the second state being a state in which the second low-side bidirectional switch allows a current to flow from the second output terminal to the second input terminal, and the controller controls the second high-side bidirectional switch and the third high-side bidirectional switch to switch the ON/OFF states of the bidirectional switches without an overlap between a third state and a fourth state, the third state being a state in which the second high-side bidirectional switch allows a current to flow from the first output terminal to the second input terminal, the fourth state being a state in which the third high-side bidirectional switch allows a current to flow from the third input terminal to the first output terminal.

An aspect of the present disclosure is a power conversion device comprising: any one of the power conversion circuits described above; a transformer that has a primary winding and a secondary winding, the primary winding having a first end connected to the first output terminal, the primary winding having a second end connected to the second output terminal; and a rectifier circuit that is connected to the secondary winding.

Advantageous Effects of Invention

A current is prevented from flowing through an unintended path.

Brief Description of Drawings

[Fig. 1] Fig. 1 is a circuit diagram of a power conversion device according to the present embodiment.
[Fig. 2] Fig. 2 is a diagram illustrating waveforms, sectors, and specific periods of three-phase AC power.
[Fig. 3] Fig. 3 is a space-vector diagram of SVPWM.
[Fig. 4] Fig. 4 is a space-vector diagram of SVPWM.
[Fig. 5] Fig. 5 is a sequence chart of switching control in sector 1a.
[Fig. 6] Fig. 6 is a sequence chart of switching control in sector 1a'.
[Fig. 7] Fig. 7 is a sequence chart of switching control in sector 1b.
[Fig. 8] Fig. 8 is a sequence chart of switching control in sector 1b'.
[Fig. 9] Fig. 9 is a sequence chart of switching control in sector 4a.
[Fig. 10] Fig. 10 is a sequence chart of switching control in sector 4a'.
[Fig. 11] Fig. 11 is a sequence chart of switching control in sector 4b.
[Fig. 12] Fig. 12 is a sequence chart of switching control in sector 4b'.
[Fig. 13] Fig. 13 is a diagram illustrating a pattern of complementary switching.
[Fig. 14] Fig. 14 is a diagram illustrating an additional pattern of complementary switching.
[Fig. 15] Fig. 15 is a circuit diagram for describing an operation of the related art.
[Fig. 16] Fig. 16 is a circuit diagram for describing an operation in sector 1a'.
[Fig. 17] Fig. 17 is a circuit diagram for describing an operation of the related art.
[Fig. 18] Fig. 18 is a circuit diagram for describing an operation of circuits in sector 1a'.
[Fig. 19] Fig. 19 is a circuit diagram for describing an operation of the related art.
[Fig. 20] Fig. 20 is a circuit diagram for describing an operation in sector 1b'.
[Fig. 21] Fig. 21 is a circuit diagram for describing an operation of the related art.
[Fig. 22] Fig. 22 is a circuit diagram for describing an operation of circuits in sector 1b'.
[Fig. 23] Fig. 23 is a circuit diagram for describing an operation of the related art.
[Fig. 24] Fig. 24 is a circuit diagram for describing an operation in sector 4a'.
[Fig. 25] Fig. 25 is a circuit diagram for describing an operation of the related art.
[Fig. 26] Fig. 26 is a circuit diagram for describing an operation of circuits in sector 4a'.
[Fig. 27] Fig. 27 is a circuit diagram for describing an operation of the related art.
[Fig. 28] Fig. 28 is a circuit diagram for describing an operation in sector 4b'.
[Fig. 29] Fig. 29 is a circuit diagram for describing an operation of the related art.
[Fig. 30] Fig. 30 is a circuit diagram for describing an operation of circuits in sector 4b'.

Description of Embodiments

<One Embodiment of Power Conversion Circuit>

An embodiment of a power conversion circuit will be described below. In the drawings, components may be enlarged for illustration to facilitate understanding. The size ratios of components may be different from actual ones or from ones in different drawings.

(1. About Configuration of Power Conversion Device)

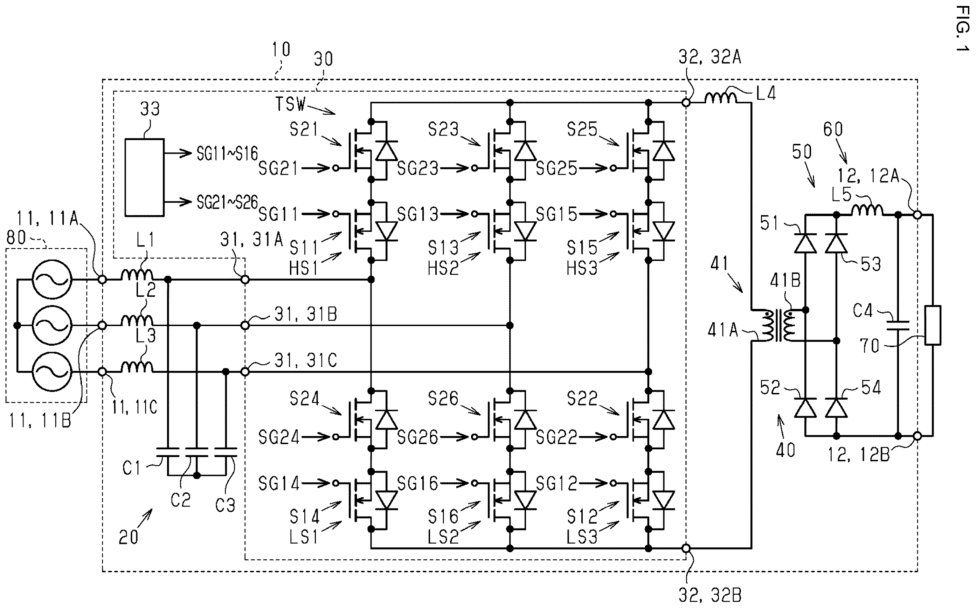

As illustrated in Fig. 1, a power conversion device 10 includes an input-side low-pass filter 20, a power conversion circuit 30, a transformer circuit 40, a rectifier circuit 50, and an output-side low-pass filter 60. The power conversion device 10 also includes three external input terminals 11 and a pair of external output terminals 12. The power conversion device 10 is a so-called isolated three-phase AC-DC converter. That is, the power conversion device 10 is capable of converting three-phase AC power, which is input to the external input terminals 11, to DC power for output from the external output terminals 12. The transformer circuit 40 is interposed on power paths from the external input terminals 11 to the external output terminals 12, resulting in electrical insulation between the external input terminal 11 side and the external output terminal 12 side.

The three external input terminals 11 of the power conversion device 10 are a first external input terminal 11A, a second external input terminal 11B, and a third external input terminal 11C. The external input terminals 11 receive, on a one-to-one basis, the three phases of three-phase AC power received from a three-phase AC power supply 80. The three-phase AC power supply 80 is a commercial three-phase three-wire power system having three Y-connected AC power supplies.

The pair of external output terminals 12 are a first external output terminal 12A and a second external output terminal 12B. Any load 70 may be connected between the first external output terminal 12A and the second external output terminal 12B. The load 70 is, for example, an electronic device driven by DC power.

The input-side low-pass filter 20 includes a first inductor L1, a second inductor L2, and a third inductor L3. The input-side low-pass filter 20 also includes a first capacitor C1, a second capacitor C2, and a third capacitor C3.

The first inductor L1 is connected, at its first end, to the first external input terminal 11A. The first capacitor C1 is connected, at its first end, to the second end of the first inductor L1.

The second inductor L2 is connected, at its first end, to the second external input terminal 11B. The second capacitor C2 is connected, at its first end, to the second end of the second inductor L2. The second capacitor C2 is connected, at its second end, to the second end of the first capacitor C1.

The third inductor L3 is connected, at its first end, to the third external input terminal 11C. The third capacitor C3 is connected, at its first end, to the second end of the third inductor L3. The third capacitor C3 is connected, at its second end, to the second end of the first capacitor C1.

The power conversion circuit 30 includes multiple input terminals 31, a pair of output terminals 32, multiple bidirectional switches TSW, and a controller 33.

The input terminals 31 are a first input terminal 31A, a second input terminal 31B, and a third input terminal 31C. The first input terminal 31A is connected to the second end of the first inductor L1. The second input terminal 31B is connected to the second end of the second inductor L2. The third input terminal 31C is connected to the second end of the third inductor L3. Therefore, the input terminals 31 of the power conversion circuit 30 receive three-phase AC power through the external input terminals 11 and the input-side low-pass filter 20. The pair of output terminals 32 are a first output terminal 32A and a second output terminal 32B. Single-phase AC power may be output through the bidirectional switches TSW from the pair of output terminals 32.

Each bidirectional switch TSW has two switch devices. Each switch device is an N-channel MOSFET (Metal Oxide Semiconductor Field Effect Transistor). That is, each switch device has a body diode. Each bidirectional switch TSW is formed of two switch devices which are connected in series to each other so that the anode terminals of the body diodes are connected to each other. In other words, each bidirectional switch TSW has two switch devices whose source terminals are connected to each other.

The bidirectional switches TSW are a first high-side bidirectional switch HS1, a first low-side bidirectional switch LS1, a second high-side bidirectional switch HS2, a second low-side bidirectional switch LS2, a third high-side bidirectional switch HS3, and a third low-side bidirectional switch LS3.

The first high-side bidirectional switch HS1 connects the first input terminal 31A and the first output terminal 32A. Specifically, the first high-side bidirectional switch HS1 has an eleventh switch device S11 and a twenty-first switch device S21. The drain terminal of the eleventh switch device S11 is connected to the first input terminal 31A. The source terminal of the twenty-first switch device S21 is connected to that of the eleventh switch device S11. The drain terminal of the twenty-first switch device S21 is connected to the first output terminal 32A.

The first low-side bidirectional switch LS1 connects the first input terminal 31A and the second output terminal 32B. Specifically, the first low-side bidirectional switch LS1 has a twenty-fourth switch device S24 and a fourteenth switch device S14. The drain terminal of the twenty-fourth switch device S24 is connected to the first input terminal 31A. The source terminal of the fourteenth switch device S14 is connected to that of the twenty-fourth switch device S24. The drain terminal of the fourteenth switch device S14 is connected to the second output terminal 32B.

The second high-side bidirectional switch HS2 connects the second input terminal 31B and the first output terminal 32A. Specifically, the second high-side bidirectional switch HS2 has a thirteenth switch device S13 and a twenty-third switch device S23. The drain terminal of the thirteenth switch device S13 is connected to the second input terminal 31B. The source terminal of the twenty-third switch device S23 is connected to that of the thirteenth switch device S13. The drain terminal of the twenty-third switch device S23 is connected to the first output terminal 32A.

The second low-side bidirectional switch LS2 connects the second input terminal 31B and the second output terminal 32B. Specifically, the second low-side bidirectional switch LS2 has a twenty-sixth switch device S26 and a sixteenth switch device S16. The drain terminal of the twenty-sixth switch device S26 is connected to the second input terminal 31B. The source terminal of the twenty-sixth switch device S26 is connected to that of the sixteenth switch device S16. The drain terminal of the sixteenth switch device S16 is connected to the second output terminal 32B.

The third high-side bidirectional switch HS3 connects the third input terminal 31C and the first output terminal 32A. Specifically, the third high-side bidirectional switch HS3 has a fifteenth switch device S15 and a twenty-fifth switch device S25. The drain terminal of the fifteenth switch device S15 is connected to the third input terminal 31C. The source terminal of the twenty-fifth switch device S25 is connected to that of the fifteenth switch device S15. The drain terminal of the twenty-fifth switch device S25 is connected to the first output terminal 32A.

The third low-side bidirectional switch LS3 connects the third input terminal 31C and the second output terminal 32B. Specifically, the third low-side bidirectional switch LS3 has a twenty-second switch device S22 and a twelfth switch device S12. The drain terminal of the twenty-second switch device S22 is connected to the third input terminal 31C. The source terminal of the twelfth switch device S12 is connected to that of the twenty-second switch device S22. The drain terminal of the twelfth switch device S12 is connected to the second output terminal 32B.

The controller 33 controls the bidirectional switches TSW. Specifically, the controller 33 performs ON/OFF control on the two switch devices, which are included in each bidirectional switch TSW, by inputting switching signals to the gate terminals of the switch devices. The switching signals include an eleventh switching signal SG11 to a sixteenth switching signal SG16 and a twenty-first switching signal SG21 to a twenty-sixth switching signal SG26. The eleventh switching signal SG11 to the sixteenth switching signal SG16 correspond, on a one-to-one basis, to the eleventh switch device S11 to the sixteenth switch device S16. The twenty-first switching signal SG21 to the twenty-sixth switching signal SG26 correspond, on a one-to-one basis, to the twenty-first switch device S21 to the twenty-sixth switch device S26.

Each bidirectional switch TSW may have four ON/OFF states in accordance with combinations of ON and OFF of the switch devices. Description will be made below by taking, as an example, the first high-side bidirectional switch HS1 and the first low-side bidirectional switch LS1.

A first state is the bidirectional ON-state. In the first high-side bidirectional switch HS1, in the case of the bidirectional ON-state, the eleventh switch device S11 is ON, and the twenty-first switch device S21 is ON. In the bidirectional ON-state, the first high-side bidirectional switch HS1 allows a current to flow from the first input terminal 31A to the first output terminal 32A, and also allows a current to flow from the first output terminal 32A to the first input terminal 31A.

In the first low-side bidirectional switch LS1, in the case of the bidirectional ON-state, the fourteenth switch device S14 is ON, and the twenty-fourth switch device S24 is ON. In the bidirectional ON-state, the first low-side bidirectional switch LS1 allows a current to flow from the first input terminal 31A to the second output terminal 32B, and also allows a current to flow from the second output terminal 32B to the first input terminal 31A.

A second state is the forward ON-state. In the first high-side bidirectional switch HS1, in the case of the forward ON-state, the eleventh switch device S11 is ON, and the twenty-first switch device S21 is OFF. In the forward ON-state, the first high-side bidirectional switch HS1 allows a current to flow from the first input terminal 31A through the body diode of the twenty-first switch device S21 to the first output terminal 32A. In contrast, the first high-side bidirectional switch HS1 does not allow a current to flow from the first output terminal 32A to the first input terminal 31A.

In the first low-side bidirectional switch LS1, in the case of the forward ON-state, the fourteenth switch device S14 is ON, and the twenty-fourth switch device S24 is OFF. In the forward ON-state, the first low-side bidirectional switch LS1 allows a current to flow from the second output terminal 32B through the body diode of the twenty-fourth switch device S24 to the first input terminal 31A. In contrast, the first low-side bidirectional switch LS1 does not allow a current to flow from the first input terminal 31A to the second output terminal 32B.

A third state is the reverse ON-state. In the first high-side bidirectional switch HS1, in the case of the reverse ON-state, the eleventh switch device S11 is OFF, and the twenty-first switch device S21 is ON. In the reverse ON-state, the first high-side bidirectional switch HS1 allows a current to flow from the first output terminal 32A through the body diode of the eleventh switch device S11 to the first input terminal 31A. In contrast, the first high-side bidirectional switch HS1 does not allow a current to flow from the first input terminal 31A to the first output terminal 32A.

In the first low-side bidirectional switch LS1, in the case of the reverse ON-state, the fourteenth switch device S14 is OFF, and the twenty-fourth switch device S24 is ON. In the reverse ON-state, the first low-side bidirectional switch LS1 allows a current to flow from the first input terminal 31A through the body diode of the fourteenth switch device S14 to the second output terminal 32B. In contrast, the first low-side bidirectional switch LS1 does not allow a current to flow from the second output terminal 32B to the first input terminal 31A.

A fourth state is the OFF-state. In the first high-side bidirectional switch HS1, in the case of the OFF-state, the eleventh switch device S11 is OFF, and the twenty-first switch device S21 is OFF. In the OFF-state, the first high-side bidirectional switch HS1 allows a current to flow neither from the first input terminal 31A to the first output terminal 32A, nor from the first output terminal 32A to the first input terminal 31A.

In the first low-side bidirectional switch LS1, in the case of the OFF-state, the fourteenth switch device S14 is OFF, and the twenty-fourth switch device S24 is OFF. In the OFF-state, the first low-side bidirectional switch LS1 allows a current to flow neither from the first input terminal 31A to the second output terminal 32B, nor from the second output terminal 32B to the first input terminal 31A.

The transformer circuit 40 includes a fourth inductor L4 and a transformer 41. The transformer 41 includes a primary winding 41A and a secondary winding 41B. The fourth inductor L4 is connected, at its first end, to the first output terminal 32A of the power conversion circuit 30. The primary winding 41A is connected, at its first end, to the second end of the fourth inductor L4. The primary winding 41A is connected, at its second end, to the second output terminal 32B of the power conversion circuit 30. The secondary winding 41B is connected to the external output terminals 12 through the rectifier circuit 50 and the output-side low-pass filter 60. The primary winding 41A is electrically insulated from the secondary winding 41B.

The rectifier circuit 50 is a full-wave rectifier circuit formed of four diodes. Specifically, the rectifier circuit 50 includes a first diode 51, a second diode 52, a third diode 53, and a fourth diode 54. The anode terminal of the first diode 51 is connected to the first end of the secondary winding 41B of the transformer 41. The cathode terminal of the first diode 51 is connected to that of the third diode 53. The anode terminal of the third diode 53 is connected to the second end of the secondary winding 41B and the cathode terminal of the fourth diode 54. The anode terminal of the fourth diode 54 is connected to that of the second diode 52. The cathode terminal of the second diode 52 is connected to the first end of the secondary winding 41B and the anode terminal of the first diode 51.

The cathode terminal of the first diode 51 and that of the third diode 53 are connected to the first external output terminal 12A through the output-side low-pass filter 60. The anode terminal of the second diode 52 and that of the fourth diode 54 are connected to the second external output terminal 12B. Therefore, the first diode 51 allows a current to flow from the first end of the secondary winding 41B to the first external output terminal 12A side. The fourth diode 54 allows a current to flow from the second external output terminal 12B to the second end of the secondary winding 41B. The third diode 53 allows a current to flow from the second end of the secondary winding 41B to the first external output terminal 12A side. The second diode 52 allows a current to flow from the second external output terminal 12B to the first end of the secondary winding 41B.

The output-side low-pass filter 60 includes a fifth inductor L5 and a fourth capacitor C4. The fifth inductor L5 is connected, at its first end, to the cathode terminal of the first diode 51 and the cathode terminal of the third diode 53. The fifth inductor L5 is connected, at its second end, to the first external output terminal 12A. The fourth capacitor C4 is connected, at its first end, to the second end of the fifth inductor L5. The fourth capacitor C4 is connected, at its second end, to the second external output terminal 12B.

(2. About Definition of Sector)

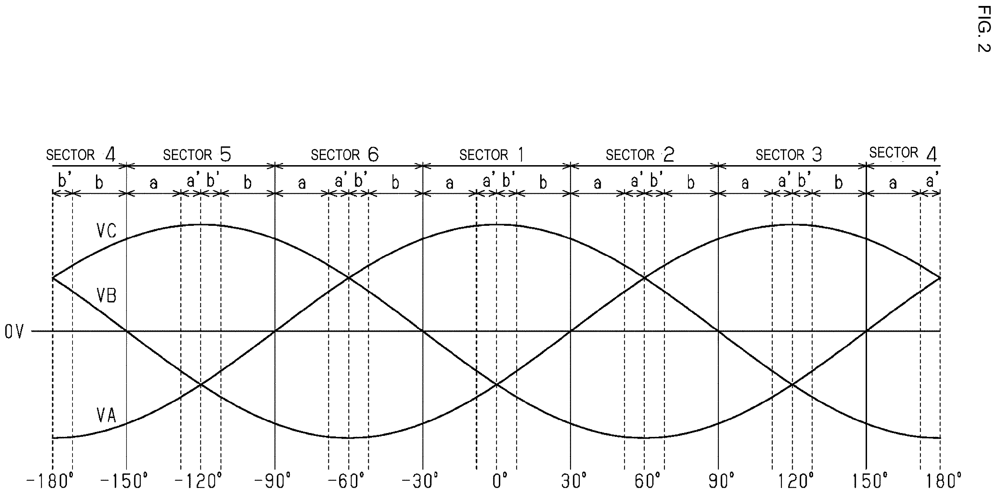

As illustrated above, the power conversion circuit 30 receives, at the input terminals 31, three-phase AC power from the three-phase AC power supply 80 through the external input terminals 11 and the input-side low-pass filter 20. As illustrated in Fig. 2, the three-phase voltages of the three-phase AC power are a first voltage VA, a second voltage VB, and a third voltage VC which are AC voltages having phases different from one another. The first input terminal 31A, the second input terminal 31B, and the third input terminal 31C receive the respective voltages on a one-to-one basis. Specifically, the first input terminal 31A receives the first voltage VA. The second input terminal 31B receives the second voltage VB. The third input terminal 31C receives the third voltage VC. The second voltage VB has a phase difference of 120° with respect to the first voltage VA. The third voltage VC has a phase difference of 120° with respect to the second voltage VB. "A phase difference of 120°" allows an error of about $\pm 1°$.

In the description below, the phase at which the first voltage VA reaches its maximum is defined as 0°. The phase at which the first voltage VA reaches its minimum is defined as -180°. Therefore, one cycle of each of the first voltage VA, the second voltage VB, and the third voltage VC is represented as a range of phase between -180°, inclusive, and 180°, exclusive. However, for the sake of convenience, the voltage phase may be expressed by using a phase of 180° or greater. When the voltage phase is represented by using a phase of 180° or greater, X° is synonymous with (-180° + (X° - 180°)). Sector 1 to sector 6 are defined as periods obtained by equally dividing the period of a single cycle into six sections. Specifically, as described below, sector 1 to sector 6 are defined as periods at intervals of 60°, where the phase of the first voltage VA is "$\theta$°".

· Sector 1: $-30° \leq \theta° < 30°$
· Sector 2: $30° \leq \theta° < 90°$
· Sector 3: $90° \leq \theta° < 150°$

- Sector 4: 150° ≤ θ° < 180° and -180° ≤ θ° < -150°
- Sector 5: -150° ≤ θ° < -90°
- Sector 6: -90° ≤ θ° < -30°

Each of sector 1 to sector 6 is further segmented into four periods. In other words, one cycle of the three-phase AC power is segmented into 24 periods. In the description below, where n, which is an integer greater than or equal to one and less than or equal to six, corresponds to a sector number, sector n is segmented into four periods of sector na, sector na', sector nb', and sector nb. In the present embodiment, each period is determined as follows. The midpoint of the period of sector n is defined as X°. The expression, "the midpoint of a period", means the midpoint value of the endpoints of each sector represented by a half-open interval. However, in the definition of sector 4a and sector 4a', X° = 180°.

- Sector na: (X° - 30°) ≤ θ° < (X° - 3°)
- Sector na': (X° - 3°) ≤ θ° < X°
- Sector nb': X° ≤ θ° < (X° + 3°)
- Sector nb: (X° + 3°) ≤ θ° < (X° + 30°)

For example, in the case of sector 1, X° is defined as 0°. Therefore, sector 1a is a period greater than or equal to -30° and less than -3°. Sector 1a' is a period greater than or equal to -3° and less than 0°. Sector 1b' is a period greater than or equal to 0° and less than 3°. Sector 1b is a period greater than or equal to 3° and less than 30°.

In the description below, the period of sector 1a' and the period of sector 4b' are referred to as a first specific period for the first voltage VA. The first specific period is predetermined within the period range in which the phase of the first voltage VA is greater than or equal to (X° - 30°) and less than or equal to X° and within the period range in which the phase of the first voltage VA is greater than or equal to (X° + 180°) and less than or equal to (X° + 210°).

The period of sector 1b' and the period of sector 4a' are referred to as a second specific period for the first voltage VA. The second specific period is predetermined within the period range in which the phase of the first voltage VA is greater than or equal to X° and less than or equal to (X° + 30°) and within the period range in which the phase of the first voltage VA is greater than or equal to (X° + 150°) and less than or equal to (X° + 180°). The first specific period and the second specific period are determined so as not to overlap each other.

In the description below, the period of sector 2a' and the period of sector 5b' are referred to as a third specific period for the third voltage VC. The third specific period is predetermined within the period range in which the phase of the first voltage VA is greater than or equal to (X° - 30°) and less than or equal to X° and within the period range in which the phase of the first voltage VA is greater than or equal to (X° + 180°) and less than or equal to (X° + 210°).

The period of sector 2b' and the period of sector 5a' are referred to as a fourth specific period for the third voltage VC. The fourth specific period is predetermined within the period range in which the phase of the first voltage VA is greater than or equal to X° and less than or equal to (X° + 30°) and within the period range in which the phase of the first voltage VA is greater than or equal to (X° + 150°) and less than or equal to (X° + 180°). The third specific period and the fourth specific period are determined so as not to overlap each other.

In the description below, the period of sector 3a' and the period of sector 6b' are referred to as a fifth specific period for the second voltage VB. The fifth specific period is predetermined within the period range in which the phase of the first voltage VA is greater than or equal to (X° - 30°) and less than or equal to X° and within the period range in which the phase of the first voltage VA is greater than or equal to (X° + 180°) and less than or equal to (X° + 210°).

The period of sector 3b' and the period of sector 6a' are referred to as a sixth specific period for the second voltage VB. The sixth specific period is predetermined within the period range in which the phase of the first voltage VA is greater than or equal to X° and less than or equal to (X° + 30°) and within the period range in which the phase of the first voltage VA is greater than or equal to (X° + 150°) and less than or equal to (X° + 180°). The fifth specific period and the sixth specific period are determined so as not to overlap each other.

(3. About Vector Sequence)

In the description below, the potential difference of the first output terminal 32A with respect to the second output terminal 32B is represented by primary voltage Vp. That is, the primary voltage Vp is a voltage applied across the fourth inductor L4 and the primary winding 41A of the transformer 41. A current flowing between the first output terminal 32A and the second output terminal 32B is represented by primary current Ip. That is, the primary current Ip is a current flowing through the fourth inductor L4 and the primary winding 41A of the transformer 41. The direction in which the primary current Ip flows from the first output terminal 32A to the second output terminal 32B is defined as the forward direction. The direction in which the primary current Ip flows from the second output terminal 32B to the first output terminal 32A is defined as the reverse direction.

The phase of the first voltage VA is referred to as A-phase; the phase of the second voltage VB is referred to as B-phase; the phase of the third voltage VC is referred to as C-phase; any phase is referred to as i-phase. Among the three phases, a phase different from the i-phase is referred to as j-phase. In the description below, the voltage difference obtained by subtracting the j-phase voltage from the i-phase voltage is described as "line voltage Vij".

The controller 33 controls the pulse width of each switching signal by using space vector pulse width modulation (SVPWM).

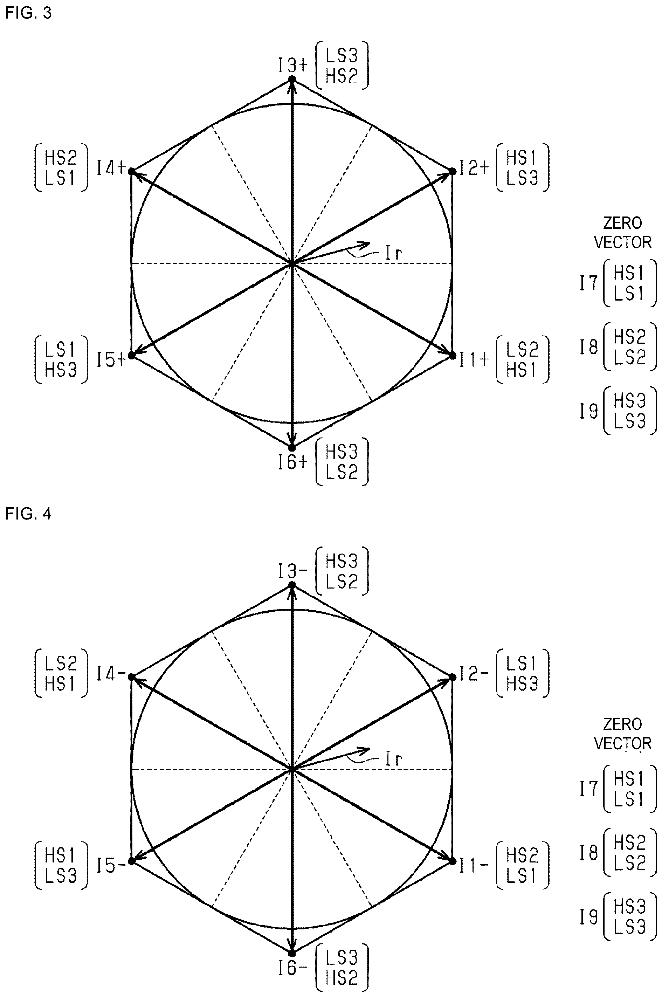

As illustrated in Figs. 3 and 4, in control using SVPWM, active vectors and zero vectors are defined. In the present embodiment, the active vectors and the zero vectors are current vectors of the power conversion circuit 30 in predetermined switching states. An active vector is expressed, as a space vector, in the mathematical expression illustrated in Math. 1 described below where m is an integer greater than or equal to one and less than or equal to six. In Math. 1, "I" represents the absolute value of the primary current Ip.

[Math. 1]

$$\overrightarrow{I_m} = \frac{2}{\sqrt{3}} I \cdot e^{j\left(\frac{m\pi}{3} - \frac{\pi}{2}\right)}$$

The active vectors are broadly categorized into forward active vectors and reverse active vectors.

Specifically, as illustrated in Fig. 3, the forward active vectors include first forward active vector I1+ to sixth forward active vector I6+. Each forward active vector is a current vector obtained when the primary voltage Vp is positive and the bidirectional switches TSW are in the corresponding switching state described below.

- The first forward active vector I1+: The second low-side bidirectional switch LS2 is in the bidirectional ON-state or the forward ON-state. In addition, the first high-side bidirectional switch HS1 is in the bidirectional ON-state or the forward ON-state. In this state, the primary voltage Vp is line voltage VAB.
- The second forward active vector I2+: The first high-side bidirectional switch HS1 is in the bidirectional ON-state or the forward ON-state. In addition, the third low-side bidirectional switch LS3 is in the bidirectional ON-state or the forward ON-state. In this state, the primary voltage Vp is line voltage VAC.
- The third forward active vector I3+: The third low-side bidirectional switch LS3 is in the bidirectional ON-state or the forward ON-state. In addition, the second high-side bidirectional switch HS2 is in the bidirectional ON-state or the forward ON-state. In this state, the primary voltage Vp is line voltage VBC.
- The fourth forward active vector I4+: The second high-side bidirectional switch HS2 is in the bidirectional ON-state or the forward ON-state. In addition, the first low-side bidirectional switch LS1 is in the bidirectional ON-state or the forward ON-state. In this state, the primary voltage Vp is line voltage VBA.
- The fifth forward active vector I5+: The first low-side bidirectional switch LS1 is in the bidirectional ON-state or the forward ON-state. In addition, the third high-side bidirectional switch HS3 is in the bidirectional ON-state or the forward ON-state. In this state, the primary voltage Vp is line voltage VCA.
- The sixth forward active vector I6+: The third high-side bidirectional switch HS3 is in the bidirectional ON-state or the forward ON-state. In addition, the second low-side bidirectional switch LS2 is in the bidirectional ON-state or in the forward ON-state. In this state, the primary voltage Vp is line voltage VCB.

As illustrated in Fig. 4, the reverse active vectors include first reverse active vector I1- to sixth reverse active vector I6-. Each reverse active vector is a current vector obtained when the primary voltage Vp is negative and the bidirectional switches TSW are in the corresponding switching state described below.

- The first reverse active vector I1-: The second high-side bidirectional switch HS2 is in the bidirectional ON-state or the reverse ON-state. In addition, the first low-side bidirectional switch LS1 is in the bidirectional ON-state or the reverse ON-state. In this state, the primary voltage Vp is line voltage VAB.
- The second reverse active vector I2-: The first low-side bidirectional switch LS1 is in the bidirectional ON-state or the reverse ON-state. In addition, the third high-side bidirectional switch HS3 is in the bidirectional ON-state or the reverse ON-state. In this state, the primary voltage Vp is line voltage VAC.
- The third reverse active vector I3-: The third high-side bidirectional switch HS3 is in the bidirectional ON-state or the reverse ON-state. In addition, the second low-side bidirectional switch LS2 is in the bidirectional ON-state or the reverse ON-state. In this state, the primary voltage Vp is line voltage VBC.
- The fourth reverse active vector I4-: The second low-side bidirectional switch LS2 is in the bidirectional ON-state or the reverse ON-state. In addition, the first high-side bidirectional switch HS1 is in the bidirectional ON-state or the reverse ON-state. In this state, the primary voltage Vp is line voltage VBA.
- The fifth reverse active vector I5-: The first high-side bidirectional switch HS1 is in the bidirectional ON-state or the reverse ON-state. In addition, the third low-side bidirectional switch LS3 is in the bidirectional ON-state or the reverse ON-state. In this state, the primary voltage Vp is line voltage VCA.
- The sixth reverse active vector I6-: the third low-side bidirectional switch LS3 is in the bidirectional ON-state or the reverse ON-state. In addition, the second high-side bidirectional switch HS2 is in the bidirectional ON-state or the reverse ON-state. In this state, the primary voltage Vp is line voltage VCB.

As illustrated in Figs. 3 and 4, the zero vectors include seventh zero vector I7, eighth zero vector I8, and ninth zero vector I9. Each zero vector is a current vector obtained when the primary voltage Vp is zero and the bidirectional switches TSW are in the corresponding switching state described below.

- The seventh zero vector I7: The first high-side bidirectional switch HS1 is in the bidirectional ON-state or the forward ON-state, and the first low-side bidirectional switch LS1 is in the bidirectional ON-state or the forward ON-state. Alternatively, the first high-side bidirectional switch HS1 is in the bidirectional ON-state or the reverse ON-state, and the first low-side bidirectional switch LS1 is in the bidirectional ON-state or the reverse ON-state.
- The eighth zero vector I8: The second high-side bidirectional switch HS2 is in the bidirectional ON-state or the forward ON-state, and the second low-side bidirectional switch LS2 is in the bidirectional ON-state or the forward ON-state. Alternatively, the second high-side bidirectional switch HS2 is in the bidirectional ON-state or the reverse ON-state, and the second low-side bidirectional switch LS2 is in the bidirectional ON-state or the reverse ON-state.
- The ninth zero vector I9: The third high-side bidirectional switch HS3 is in the bidirectional ON-state or the forward ON-state, and the third low-side bidirectional switch LS3 is in the bidirectional ON-state or the forward ON-state. Alternatively, the third high-side bidirectional switch HS3 is in the bidirectional ON-state or the reverse ON-state, and the third low-side bidirectional switch LS3 is in the bidirectional ON-state or the reverse ON-state.

A reference vector Ir of a current in sector n is analogous to a composite vector of active vectors and a zero vector. Specifically, the reference vector Ir is analogous as described below, when x = n and y = x + 1. However, when x = 6, y = 1. The reference vector Ir of a current in sector n is analogous to a composite vector of the x-th forward active vector Ix+, the y-th forward active vector Iy+, and a zero vector. Otherwise, the reference vector Ir of a current in sector n is analogous to a composite vector of the x-th reverse active vector Ix-, the y-th reverse active vector Iy-, and a zero vector. The zero vector is the seventh zero vector I7 in sector 1 and sector 4. The zero vector is the ninth zero vector I9 in sector 2 and sector 5. The zero vector is the eighth zero vector I8 in sector 3 and sector 6.

In principle, the controller 33 performs ON/OFF control on the switch devices so that the reference vector Ir makes transitions among the active vectors and zero vectors in certain order in accordance with the magnitude relationship between the first voltage VA, the second voltage VB, and the third voltage VC. Specifically, in sector na and sector na', the controller 33 performs ON/-OFF control on the switch devices so that the current vector follows a first vector sequence described in (a). In sector nb and sector nb', the controller 33 performs ON/-OFF control on the switch devices so that the current vector follows a second vector sequence described in (b). (a) The first vector sequence: the order of the x-th forward active vector Ix+, the y-th forward active vector Iy+, a zero vector, the x-th reverse active vector Ix-, and the y-th reverse active vector Iy-, and the zero vector. (b) The second vector sequence: the y-th forward active vector Iy+, the x-th forward active vector Ix+, a zero vector, the y-th reverse active vector Iy-, the x-th reverse active vector Ix-, and the zero vector.

Thus, for example, when n = 3, in sector 3a and sector 3a', the controller 33 performs ON/OFF control on the switch devices so that the reference vector Ir makes transitions in the order of the third forward active vector I3+, the fourth forward active vector I4+, the ninth zero vector I9, the third reverse active vector I3-, the fourth reverse active vector I4-, and the ninth zero vector I9. In sector 3b and sector 3b', that is, the sixth specific period, the controller 33 performs ON/OFF control on the switch devices so that the reference vector Ir makes transitions in the order of the fourth forward active vector I4+, the third forward active vector I3+, the ninth zero vector I9, the fourth reverse active vector I4-, the third reverse active vector I3-, and the ninth zero vector I9.

In sector na and sector na', the controller 33 repeatedly performs the ON/OFF control on the switch devices according to the first vector sequence in each certain period Ts. The period Ts is much shorter than the period of each of sector na and sector na'.

In sector nb and sector nb', the controller 33 repeatedly performs the ON/OFF control on the switch devices according to the second vector sequence in each period Ts which is the same as that for the first vector sequence. The period Ts is much shorter than the period of each of sector nb and sector nb'.

(4. Concrete Examples of Switching Pattern)

Switching patterns according to the vector sequences will be described by taking, as examples, the periods of sector 1 and sector 4.

(4-1. Control in Sector 1a and Sector 1a')

As illustrated in Fig. 2, The period of sector 1a and the period of sector 1a', that is, the first specific period, the first voltage VA is the largest among the voltages. In addition, the third voltage VC is greater than or equal to the second voltage VB.

As illustrated in Figs. 3 and 4, in sector 1a and the first specific period, the reference vector Ir makes transitions according to the first vector sequence. That is, the reference vector Ir makes transitions in the order of the first forward active vector I1+, the second forward active vector I2+, the seventh zero vector I7, the first reverse active vector I1-, the second reverse active vector I2-, and the seventh zero vector I7.

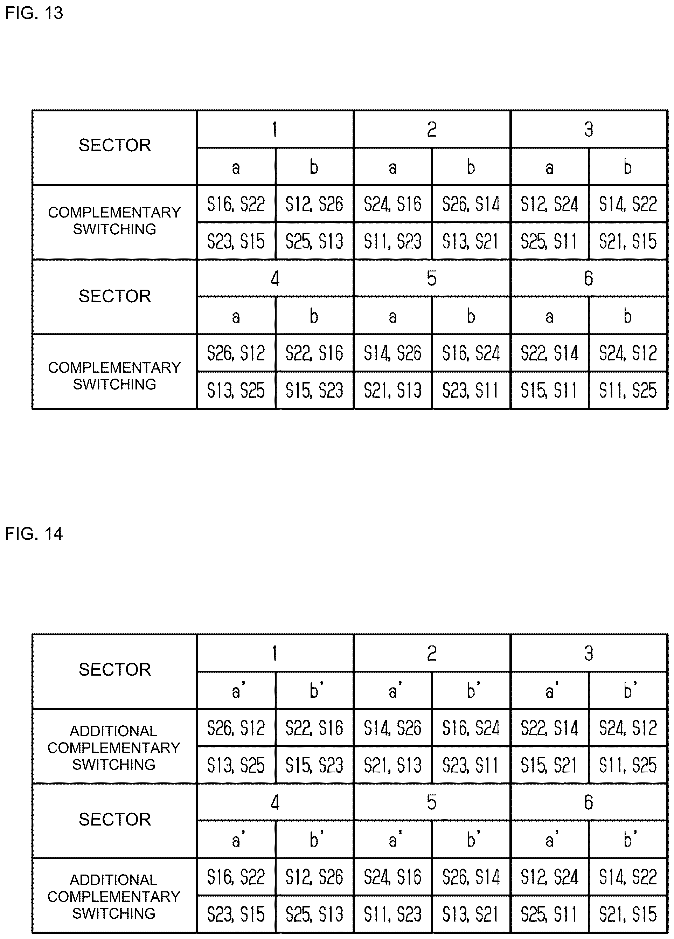

The switching pattern in sector 1a will be described. In the period of sector 1a, complementary switching control is performed in the transitions of the reference vector Ir. That is, as illustrated in Fig. 13, the controller 33 exerts control so that the ON/OFF state of the sixteenth switch device S16 of the second low-side bidirectional switch LS2 is complementary to the ON/-OFF state of the twenty-second switch device S22 of the third low-side bidirectional switch LS3. In addition, in the period of sector 1a, the controller 33 exerts control so that the ON/OFF state of the twenty-third switch device S23 of the second high-side bidirectional switch HS2 is complementary to the ON/OFF state of the fifteenth switch device S15 of the third high-side bidirectional switch HS3. ON/OFF states complementary to each other refers to the state in which one of the two switches is in the ON-state and the other is in the OFF-state.

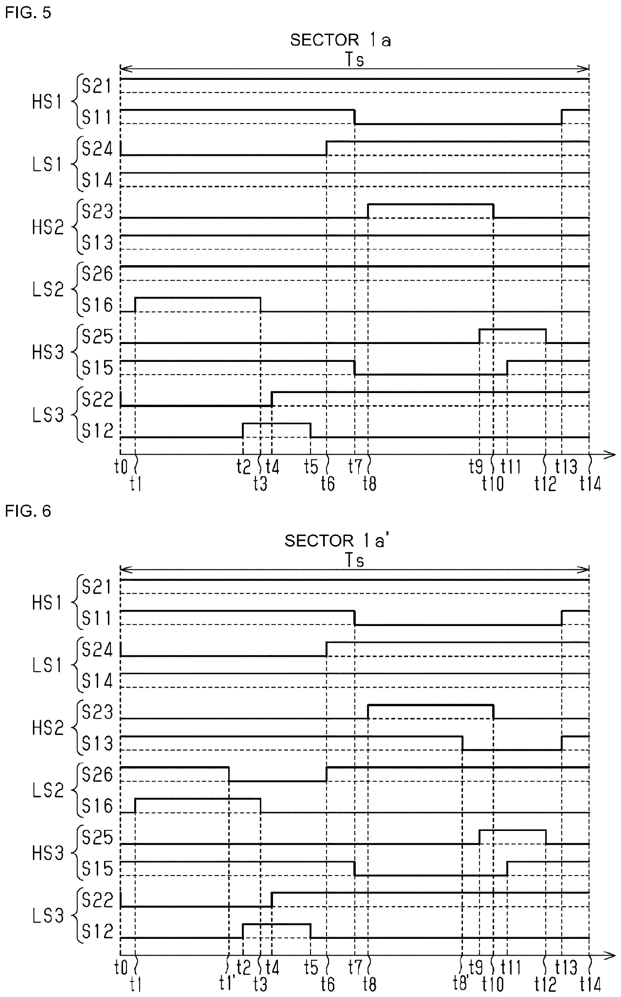

In the period of sector 1a, the controller 33 performs ON/OFF control described below. That is, as illustrated in Fig. 5, the controller 33 exerts control so that the twenty-first switch device S21 of the first high-side bidirectional switch HS1 and the fourteenth switch device S14 of the first low-side bidirectional switch LS1 are continuously in the ON-state during the period of sector 1a. In addition, the controller 33 exerts control so that the thirteenth switch device S13 of the second high-side bidirectional switch HS2 and the twenty-sixth switch device S26 of the second low-side bidirectional switch LS2 are continuously in the ON-state during the period of sector 1a.

The switching pattern from time t0 to time t14 in sector 1a will be described below. Just before time t0 of sector 1a, the reference vector Ir is the seventh zero vector I7, which is not illustrated. Specifically, the first high-side bidirectional switch HS1 is in the bidirectional ON-state. In addition, the first low-side bidirectional switch LS1 is in the bidirectional ON-state. The second high-side bidirectional switch HS2 is in the forward ON-state. The second low-side bidirectional switch LS2 is in the reverse ON-state. The third high-side bidirectional switch HS3 is in the forward ON-state. The third low-side bidirectional switch LS3 is in the reverse ON-state. The ON/OFF states of the switch devices just before time t0 are the same as those at time t14 which are described below.

As illustrated in Fig. 5, at time t0 of sector 1a, the controller 33 causes the first low-side bidirectional switch LS1 to enter the forward ON-state. In addition, at time t0, the controller 33 causes the third low-side bidirectional switch LS3 to enter the OFF-state. At time t1, the controller 33 causes the second low-side bidirectional switch LS2 to enter the bidirectional ON-state. At time t2, the controller 33 causes the third low-side bidirectional switch LS3 to enter the forward ON-state. At time t3, the controller 33 causes the second low-side bidirectional switch LS2 to enter the reverse ON-state. Thus, in the period from time t0 to time t3, the reference vector Ir is the first forward active vector I1+.

Then, at time t4, the controller 33 causes the third low-side bidirectional switch LS3 to enter the bidirectional ON-state. At time t5, the controller 33 causes the third low-side bidirectional switch LS3 to enter the reverse ON-state. Thus, for the period from time t3 to time t5, the reference vector Ir is the second forward active vector I2+.

At time t6, the controller 33 causes the first low-side bidirectional switch LS1 to enter the bidirectional ON-state. At time t7, the controller 33 causes the first high-side bidirectional switch HS1 to enter the reverse ON-state. In addition, at time t7, the controller 33 causes the third high-side bidirectional switch HS3 to enter the bidirectional OFF-state. Thus, for the period from time t5 to time t7, the reference vector Ir matches the seventh zero vector I7.

At time t8, the controller 33 causes the second high-side bidirectional switch HS2 to enter the bidirectional ON-state. At time t9, the controller 33 causes the third high-side bidirectional switch HS3 to enter the reverse ON-state. At time t10, the controller 33 causes the second high-side bidirectional switch HS2 to enter the forward ON-state. Thus, in the period from time t7 to time t10, the reference vector Ir is the first reverse active vector I1-.

At time t11, the controller 33 causes the third high-side bidirectional switch HS3 to enter the bidirectional ON-state. At time t12, the controller 33 causes the third high-side bidirectional switch HS3 to enter the forward ON-state. Thus, for the period from time t9 to time t12, the reference vector Ir is the second reverse active vector I2-.

At time t13, the controller 33 causes the first high-side bidirectional switch HS1 to enter the bidirectional ON-state. At time t14 which is a time after elapse of a predetermined time from time t13, a single period Ts of the switching pattern according to the first vector sequence ends. Thus, for the period from time t12 to time t14, the reference vector Ir is the seventh zero vector I7.

The switching pattern in sector 1a' will be described. As illustrated in Figs. 5 and 6, the ON/OFF control exerted by the controller 33 in the period of sector 1a' is substantially the same as that in the period of sector 1a except control on the twenty-sixth switch device S26 of the second low-side bidirectional switch LS2 and the thirteenth switch device S13 of the second high-side bidirectional switch HS2.

Specifically, the controller 33 performs complementary switching control, which is described below, in addition to the complementary switching control in sector 1a. That is, as illustrated in Fig. 14, in the period of sector 1a', the controller 33 exerts control so that the ON/OFF state of the twenty-sixth switch device S26 of the second low-side bidirectional switch LS2 is complementary to that of the twelfth switch device S12 of the third low-side bidirectional switch LS3. In addition, in the period of sector 1a', the controller 33 exerts control so that the ON/OFF state of the thirteenth switch device S13 of the second high-side bidirectional switch HS2 is complementary to that of the twenty-fifth switch device S25 of the third high-side bidirectional switch HS3.

Therefore, in the period of sector 1a', that is, the first specific period, the controller 33 controls the third low-side bidirectional switch LS3 and the second low-side bidirectional switch LS2 so that the ON/OFF states of the bidirectional switches TSW are switched without an overlap between the state, in which the third low-side bidirectional switch LS3 allows a current to flow from the second output terminal 32B to the third input terminal 31C, and the state, in which the second low-side bidirectional switch LS2 allows a current to flow from the second input terminal 31B to the second output terminal 32B.

In addition, in the first specific period, the controller 33 controls the second high-side bidirectional switch HS2 and the third high-side bidirectional switch HS3 so that the ON/OFF states of the bidirectional switches TSW are switched without an overlap between the state, in which the second high-side bidirectional switch HS2 allows a current to flow from the second input terminal 31B to the first output terminal 32A, and the state, in which the third high-side bidirectional switch HS3 allows a current to flow from the first output terminal 32A to the third input terminal 31C.

In other words, in the first specific period, the controller 33 controls the bidirectional switches TSW so that the second low-side bidirectional switch LS2 and the third low-side bidirectional switch LS3 are in any of the following states: either one of the bidirectional switches TSW is in the OFF-state; both are in the forward ON-state; and both are in the reverse ON-state. In addition, the controller 33 controls the bidirectional switches TSW so that the second high-side bidirectional switch HS2 and the third high-side bidirectional switch HS3 are in any of the following states: either one of the bidirectional switches TSW is in the OFF-state; both are in the forward ON-state; and both are in the reverse ON-state.

More specifically, in sector 1a', the controller 33 controls the bidirectional switches TSW as follows.

As illustrated in Fig. 6, for the period from time t1' to time t6 in sector 1a', the controller 33 causes the twenty-sixth switch device S26 of the second low-side bidirectional switch LS2 to be in the OFF-state. The time t1' is a time after time t1 and before time t2.

Thus, for the period from time t1' to time t3, the second low-side bidirectional switch LS2 is in the forward ON-state. For the period from time t3 to time t6, the second low-side bidirectional switch LS2 is in the OFF-state. In contrast, for the period from time t1' to time t2, the third low-side bidirectional switch LS3 is in the OFF-state. For the period from time t2 to time t4, the third low-side bidirectional switch LS3 is in the forward ON-state.

For the period from time t8' to time t13 of sector 1a', the controller 33 causes the thirteenth switch device S13 of the second high-side bidirectional switch HS2 to be in the OFF-state. Time t8' is a time after time t8 and before time t9.

Thus, for the period from time t8' to time t10, the second high-side bidirectional switch HS2 is in the reverse ON-state. For the period from time t10 to time t13, the second high-side bidirectional switch HS2 is in the OFF-state. In contrast, for the period from time t8' to time t9, the third high-side bidirectional switch HS3 is in the OFF-state. For the period from time t9 to time t11, the third high-side bidirectional switch HS3 is in the reverse ON-state.

(4-2. Control in Sector 1b and Sector 1b')

As illustrated in Fig. 2, in the period of sector 1b and the period of sector 1b', that is, the second specific period, the first voltage VA is the largest among the voltages. In addition, the second voltage VB is greater than or equal to the third voltage VC. That is, in the period of sector 1b and the period of sector 1b', the magnitude relationship between the second voltage VB and the third voltage VC is transposed with respect to that in the period of sector 1a.

As illustrated in Figs. 3 and 4, in sector 1b and sector 1b', the reference vector Ir makes transitions in the order of the second forward active vector I2+, the first forward active vector I1+, the seventh zero vector I7, the second reverse active vector I2-, the first reverse active vector I1-, and the seventh zero vector I7.

The switching pattern in sector 1b will be described. In sector 1b, in the transitions of the reference vector Ir, the following complementary switching control is performed. That is, as illustrated in Fig. 13, the controller 33 exerts control so that the ON/OFF state of the twelfth switch device S12 of the third low-side bidirectional switch LS3 is complementary to the ON/OFF state of the twenty-sixth switch device S26 of the second low-side bidirectional switch LS2. In addition, in the period of sector 1b, the controller 33 exerts control so that the ON/OFF state of the twenty-fifth switch device S25 of the third high-side bidirectional switch HS3 is complementary to that of the thirteenth switch device S13 of the second high-side bidirectional switch HS2.

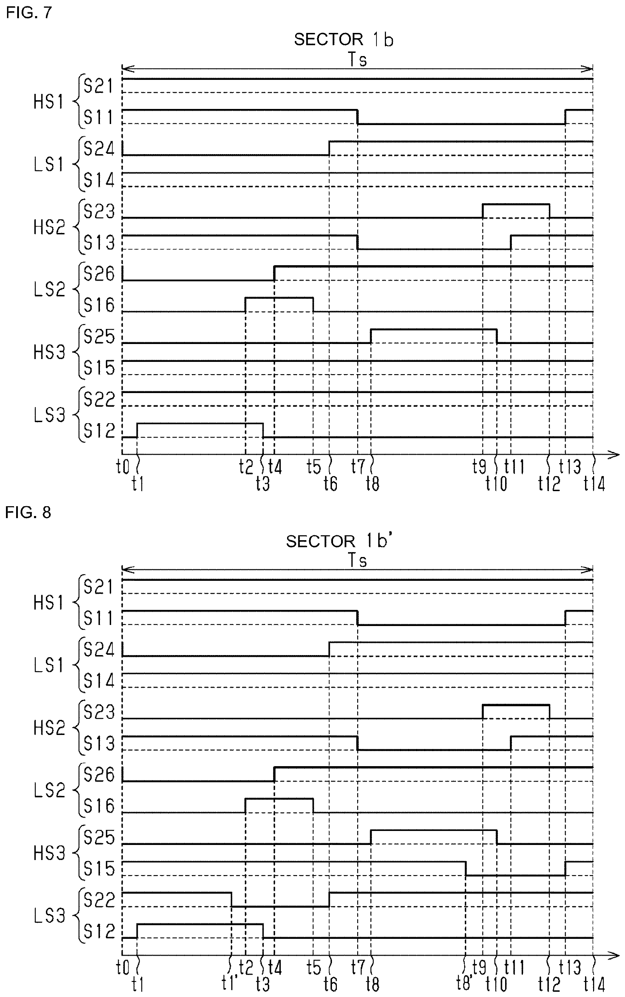

In the period of sector 1b, the controller 33 performs continuous-ON control as described below. That is, as illustrated in Fig. 7, the controller 33 exerts control so that the twenty-first switch device S21 of the first high-side bidirectional switch HS1 and the fourteenth switch device S14 of the first low-side bidirectional switch LS1 are continuously in the ON-state during the period of sector 1b. In addition, the controller 33 exerts control so that the fifteenth switch device S15 of the third high-side bidirectional switch HS3 and the twenty-second switch device S22 of the third low-side bidirectional switch LS3 are continuously in the ON-state during the period of sector 1b.

Therefore, the switching pattern in sector 1b is as follows on the basis of the magnitude relationship between the voltages, the vector sequence, and the complementary switching control pattern.

As illustrated in Figs. 5 and 7, the switching pattern of the first high-side bidirectional switch HS1 in sector 1b is the same as that in sector 1a. The switching pattern of the first low-side bidirectional switch LS1 in sector 1b is the same as that in sector 1a.

The switching pattern of the second high-side bidirectional switch HS2 in sector 1b is the same as that of the third high-side bidirectional switch HS3 in sector 1a. The switching pattern of the second low-side bidirectional switch LS2 in sector 1b is the same as that of the third low-side bidirectional switch LS3 in sector 1a.

The switching pattern of the third high-side bidirectional switch HS3 in sector 1b is the same as that of the second high-side bidirectional switch HS2 in sector 1a. The switching pattern of the third low-side bidirectional switch LS3 in sector 1b is the same as that of the second low-side bidirectional switch LS2 in sector 1a.

The switching pattern in sector 1b' will be described. As illustrated in Figs. 7 and 8, the ON/OFF control performed by the controller 33 in the period of sector 1b' is substantially the same as that in the period of sector 1b except control on the twenty-second switch device S22 of the third low-side bidirectional switch LS3 and the fifteenth switch device S15 of the third high-side bidirectional switch HS3.

Specifically, in the period of sector 1b', in addition to the complementary switching control in sector 1b, the complementary switching control described below is performed. That is, as illustrated in Fig. 14, in the period of sector 1b', the controller 33 exerts control so that the ON/OFF state of the twenty-second switch device S22 of the third low-side bidirectional switch LS3 is complementary to that of the sixteenth switch device S16 of the second low-side bidirectional switch LS2. In addition, in the period of sector 1b', the controller 33 exerts control so that the ON/OFF state of the fifteenth switch device S15 of the third high-side bidirectional switch HS3 is complementary to that of the twenty-third switch device S23 of the second high-side bidirectional switch HS2.

Therefore, in the period of sector 1b', that is, the second specific period, the controller 33 controls the third low-side bidirectional switch LS3 and the second low-side bidirectional switch LS2 so that the ON/OFF states of the bidirectional switches TSW are switched without an overlap between the state, in which the third low-side bidirectional switch LS3 allows a current to flow from the third input terminal 31C to the second output terminal 32B, and the state, in which the second low-side bidirectional switch LS2 allows a current to flow from the second output terminal 32B to the second input terminal 31B.

In addition, in the second specific period, the controller 33 controls the second high-side bidirectional switch HS2 and the third high-side bidirectional switch HS3 so that the ON/OFF states of the bidirectional switches TSW are switched without an overlap between the state, in which the second high-side bidirectional switch HS2 allows a current to flow from the first output terminal 32A to the second input terminal 31B, and the state, in which the third high-side bidirectional switch HS3 allows a current to flow from the third input terminal 31C to the first output terminal 32A.

In other words, in the second specific period, the controller 33 controls the bidirectional switches TSW so that the second low-side bidirectional switch LS2 and the third low-side bidirectional switch LS3 are in any of the following states: either one of the bidirectional switches TSW is in the OFF-state; both are in the forward ON-state; and both are in the reverse ON-state. In addition, the controller 33 controls the bidirectional switches TSW so that the second high-side bidirectional switch HS2 and the third high-side bidirectional switch HS3 are in any of the following states: either one of the bidirectional switches TSW is in the OFF-state; both are in the forward ON-state; and both are in the reverse ON-state.

More specifically, in sector 1b', the controller 33 controls the bidirectional switches TSW as follows.

As illustrated in Fig. 8, for the period from time t1' to time t6 of sector 1b', the controller 33 causes the twenty-second switch device S22 of the third low-side bidirectional switch LS3 to be in the OFF-state. Time t1' is a time after time t1 and before time t2.

Thus, for the period from time t1' to time t3, the third low-side bidirectional switch LS3 is in the forward ON-state. For the period from time t3 to time t6, the third low-side bidirectional switch LS3 is in the OFF-state. In contrast, for the period from time t1' to time t2, the second low-side bidirectional switch LS2 is in the OFF-state. For the period from time t2 to time t4, the second low-side bidirectional switch LS2 is in the forward ON-state.

For the period from time t8' to time t13 of sector 1b', the controller 33 causes the fifteenth switch device S15 of the third high-side bidirectional switch HS3 to be in the OFF-state. Time t8' is a time after time t8 and before time t9.

Thus, for the period from time t8' to time t10, the third high-side bidirectional switch HS3 is in the reverse ON-state. For the period from time t10 to time t13, the third high-side bidirectional switch HS3 is in the OFF-state. In contrast, for the period from time t8' to time t9, the second high-side bidirectional switch HS2 is in the OFF-state. For the period from time t9 to time t11, the second high-side bidirectional switch HS2 is in the reverse ON-state.

(4-3. Control in Sector 4a and Sector 4a')

As illustrated in Fig. 2, in the period of sector 4a and the period of sector 4a', that is, the second specific period, the first voltage VA is the smallest among the voltages. In addition, the third voltage VC is less than or equal to the second voltage VB. That is, in the period of sector 4a and the period of sector 4a', the first voltage VA, the second voltage VB, and the third voltage VC are opposite in polarity with respect to those in the period of sector 1a and sector 1a'.

As illustrated in Figs. 3 and 4, in the period of sector 4a and the period of sector 4a', the reference vector Ir makes transitions in the order of the fourth forward active vector I4+, the fifth forward active vector I5+, the seventh zero vector I7, the fourth reverse active vector I4-, the fifth reverse active vector I5-, and the seventh zero vector I7.

The switching pattern in sector 4a will be described. In the period of sector 4a, in the transitions of the reference vector Ir, the following complementary switching control is performed. That is, as illustrated in Fig. 13, the controller 33 exerts control so that the ON/OFF state of the twenty-sixth switch device S26 of the second low-side bidirectional switch LS2 is complementary to that of the twelfth switch device S12 of the third low-side bidirectional switch LS3. In addition, in the period of sector 4a, the controller 33 exerts control so that the ON/OFF state of the thirteenth switch device S13 of the second high-side bidirectional switch HS2 is complementary to that of the twenty-fifth switch device S25 of the third high-side bidirectional switch HS3.

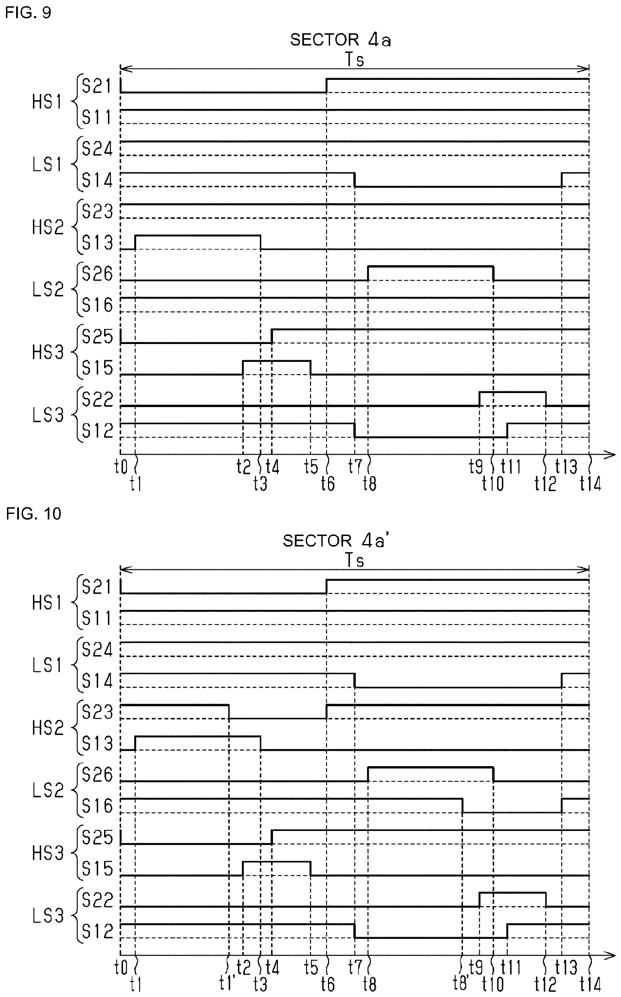

In the period of sector 4a, the controller 33 performs continuous-ON control as described below. That is, as illustrated in Fig. 9, the controller 33 exerts control so that the eleventh switch device S11 of the first high-side bidirectional switch HS1 and the twenty-fourth switch device S24 of the first low-side bidirectional switch LS1 are continuously in the ON-state during the period of sector 4a. In addition, the controller 33 exerts control so that the twenty-third switch device S23 of the second high-side bidirectional switch HS2 and the sixteenth switch device S16 of the second low-side bidirectional switch LS2 are continuously in the ON-state during the period of sector 4a.

Therefore, the switching pattern in sector 4a is as follows on the basis of the magnitude relationship between the voltages, the vector sequence, and the complementary switching control pattern.

As illustrated in Figs. 5 and 9, the switching pattern of the first high-side bidirectional switch HS1 in sector 4a is the same as that of the first low-side bidirectional switch LS1 in sector 1a. The switching pattern of the first low-side bidirectional switch LS1 in sector 4a is the same as that of the first high-side bidirectional switch HS1 in sector 1a.

The switching pattern of the second high-side bidirectional switch HS2 in sector 4a is the same as that of the second low-side bidirectional switch LS2 in sector 1a. The switching pattern of the second low-side bidirectional switch LS2 in sector 4a is the same as that of the second high-side bidirectional switch HS2 in sector 1a.

The switching pattern of the third high-side bidirectional switch HS3 in sector 4a is the same as that of the third low-side bidirectional switch LS3 in sector 1a. The switching pattern of the third low-side bidirectional switch LS3 in sector 4a is the same as that of the third high-side bidirectional switch HS3 in sector 1a.

The switching pattern in sector 4a' will be described. As illustrated in Figs. 9 and 10, the ON/OFF control performed by the controller 33 in the period of sector 4a' is substantially the same as that in the period of sector 4a except control on the twenty-third switch device S23 of the second high-side bidirectional switch HS2 and the sixteenth switch device S16 of the second low-side bidirectional switch LS2.

Specifically, in the period of sector 4a', in addition to the complementary switching control in sector 4a, the following complementary switching control is performed. That is, as illustrated in Fig. 14, in the period of sector 4a', the controller 33 exerts control so that the ON/OFF state of the sixteenth switch device S16 of the second low-side bidirectional switch LS2 is complementary to that of the twenty-second switch device S22 of the third low-side bidirectional switch LS3. In addition, in the period of sector 4a', the controller 33 exerts control so that the ON/OFF state of the twenty-third switch device S23 of the second high-side bidirectional switch HS2 is complementary to that of the fifteenth switch device S15 of the third high-side bidirectional switch HS3.

Therefore, in the period of sector 4a', the controller 33 controls the third low-side bidirectional switch LS3 and the second low-side bidirectional switch LS2 so that the ON/OFF states of the bidirectional switches TSW are switched without an overlap between the state, in which the third low-side bidirectional switch LS3 allows a current to flow from the third input terminal 31C to the second output terminal 32B, and the state, in which the second low-side bidirectional switch LS2 allows a current to flow from the second output terminal 32B to the second input terminal 31B.

In addition, in the period of sector 4a', the controller 33 controls the second high-side bidirectional switch HS2 and the third high-side bidirectional switch HS3 so that the ON/OFF states of the bidirectional switches TSW are switched without an overlap between the state, in which the second high-side bidirectional switch HS2 allows a current to flow from the first output terminal 32A to the second input terminal 31B, and the state, in which the third high-side bidirectional switch HS3 allows a current to flow from the third input terminal 31C to the first output terminal 32A.

In other words, in the second specific period, the controller 33 controls the bidirectional switches TSW so that the second low-side bidirectional switch LS2 and the third low-side bidirectional switch LS3 are in any of the following states: either one of the bidirectional switches TSW is in the OFF-state; both are in the forward ON-state; and both are in the reverse ON-state. In addition, the controller 33 controls the bidirectional switches TSW so that the second high-side bidirectional switch HS2 and the third high-side bidirectional switch HS3 are in any of the following states: either one of the bidirectional switches TSW is in the OFF-state; both are in the forward ON-state; and both are in the reverse ON-state.

More specifically, in sector 4a', the controller 33 controls the bidirectional switches TSW as follows.

As illustrated in Fig. 10, for the period from time t1' to time t6 of sector 4a', the controller 33 causes the twenty-third switch device S23 of the second high-side bidirectional switch HS2 to be in the OFF-state. Time t1' is a time after time t1 and before time t2.

Thus, for the period from time t1' to time t3, the second high-side bidirectional switch HS2 is in the forward ON-state. For the period from time t3 to time t6, the second high-side bidirectional switch HS2 is in the OFF-state. In contrast, for the period from time t1' to time t2, the third high-side bidirectional switch HS3 is in the OFF-state. For the period from time t2 to time t4, the third high-side bidirectional switch HS3 is in the forward ON-state.

For the period from time t8' to time t13 of sector 4a', the controller 33 causes the sixteenth switch device S16 of the second low-side bidirectional switch LS2 to be in the OFF-state. Time t8' is a time after time t8 and before time t9.

Thus, for the period from time t8' to time t10, the second low-side bidirectional switch LS2 is in the reverse ON-state. For the period from time t10 to time t13, the second low-side bidirectional switch LS2 is in the OFF-state. In contrast, for the period from time t8' to time t9, the third low-side bidirectional switch LS3 is in the OFF-state. For the period from time t9 to time t11, the third low-side bidirectional switch LS3 is in the reverse ON-state.

(4-4. Control in Sector 4b and Sector 4b')

As illustrated in Fig. 2, in the period of sector 4b and the period of sector 4b', that is, the first specific period, the first voltage VA is the smallest among the voltages. In addition, the second voltage VB is less than or equal to the third voltage VC. That is, in the period of sector 4b and the period of sector 4b', the first voltage VA, the second voltage VB, and the third voltage VC are opposite in polarity with respect to those in the period of sector 1b and sector 1b'.

As illustrated in Figs. 3 and 4, in the period of sector 4b and the period of sector 4b', the reference vector Ir makes transitions in the order of fifth forward active vector I5+, the fourth forward active vector I4+, the seventh zero vector I7, the fifth reverse active vector I5-, the fourth reverse active vector I4-, and the seventh zero vector I7.

The switching pattern in sector 4b will be described. In the period of sector 4b, in the transitions of the reference vector Ir, the following complementary switching control is performed. That is, as illustrated in Fig. 13, control is exerted so that the ON/OFF state of the twenty-second switch device S22 of the third low-side bidirectional switch LS3 is complementary to that of the sixteenth switch device S16 of the second low-side bidirectional switch LS2. In addition, in the period of sector 4b, control is exerted so that the ON/OFF state of the fifteenth switch device S15 of the third high-side bidirectional switch HS3 is complementary to that of the twenty-third switch device S23 of the second high-side bidirectional switch HS2.

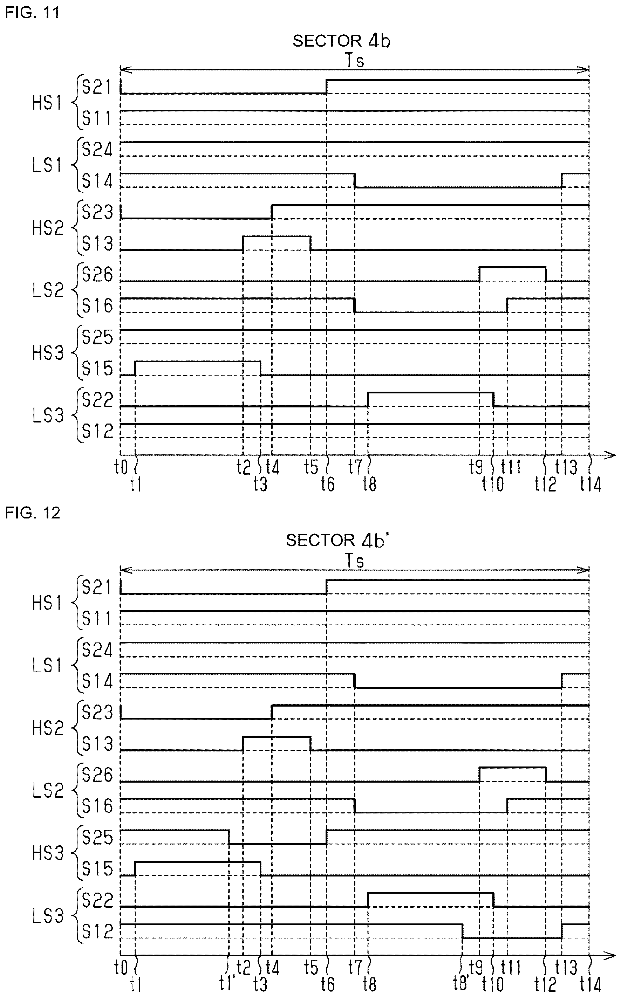

In the period of sector 4b, the controller 33 performs the continuous-ON control as described below. That is, as illustrated in Fig. 11, the controller 33 exerts control so that the eleventh switch device S11 of the first high-side bidirectional switch HS1 and the twenty-fourth switch device S24 of the first low-side bidirectional switch LS1 are continuously in the ON-state during the period of sector 4b. In addition, the controller 33 exerts control so that the twenty-fifth switch device S25 of the third high-side bidirectional switch HS3 and the twelfth switch device S12 of the third low-side bidirectional switch LS3 are continuously in the ON-state during the period of sector 4b.

Therefore, the switching pattern in sector 4b is as follows on the basis of the magnitude relationship between the voltages, the vector sequence, and the complementary switching control pattern.

As illustrated in Figs. 7 and 11, the switching pattern of the first high-side bidirectional switch HS1 in sector 4b is the same as that of the first low-side bidirectional switch LS1 in sector 1b. The switching pattern of the first low-side bidirectional switch LS1 in sector 4b is the same as that of the first high-side bidirectional switch HS1 in sector 1b.

The switching pattern of the second high-side bidirectional switch HS2 in sector 4b is the same as that of the second low-side bidirectional switch LS2 in sector 1b. The switching pattern of the second low-side bidirectional switch LS2 in sector 4b is the same as that of the second high-side bidirectional switch HS2 in sector 1b.

The switching pattern of the third high-side bidirectional switch HS3 in sector 4b is the same as that of the third low-side bidirectional switch LS3 in sector 1b. The switching pattern of the third low-side bidirectional switch LS3 in sector 4b is the same as that of the third high-side bidirectional switch HS3 in sector 1b.

The switching pattern in sector 4b' will be described. As illustrated in Figs. 11 and 12, the ON/OFF control performed by the controller 33 in the period of sector 4b' is substantially the same as that in the period of sector 4b except control on the twenty-fifth switch device S25 of the third high-side bidirectional switch HS3 and the twelfth switch device S12 of the third low-side bidirectional switch LS3.

Specifically, in the period of sector 4b', in addition to the complementary switching control in sector 4b, the following complementary switching control is performed. That is, as illustrated in Fig. 14, in the period of sector 4b', the controller 33 exerts control so that the ON/OFF state of the twelfth switch device S12 of the third low-side bidirectional switch LS3 is complementary to that of the twenty-sixth switch device S26 of the second low-side bidirectional switch LS2. In addition, in the period of sector 4b', the controller 33 exerts control so that the ON/OFF state of the twenty-fifth switch device S25 of the third high-side bidirectional switch HS3 is complementary to that of the thirteenth switch device S13 of the second high-side bidirectional switch HS2.

Therefore, in the period of sector 4b', the controller 33 controls the third low-side bidirectional switch LS3 and the second low-side bidirectional switch LS2 so that the ON/OFF states of the bidirectional switches TSW are switched without an overlap between the state, in which the third low-side bidirectional switch LS3 allows a current to flow from the second output terminal 32B to the third input terminal 31C, and the state, in which the second low-side bidirectional switch LS2 allows a current to flow from the second input terminal 31B to the second output terminal 32B.

In addition, in the period of sector 4b', the controller 33 controls the second high-side bidirectional switch HS2 and the third high-side bidirectional switch HS3 so that the ON/OFF states of the bidirectional switches TSW are switched without an overlap between the state, in which the second high-side bidirectional switch HS2 allows a current to flow from the second input terminal 31B to the first output terminal 32A, and the state, in which the third high-side bidirectional switch HS3 allows a current to flow from the first output terminal 32A to the third input terminal 31C.

In other words, in the first specific period, the controller 33 controls the bidirectional switches TSW so that the second low-side bidirectional switch LS2 and the third low-side bidirectional switch LS3 are in any of the following states: either one of the bidirectional switches TSW is in the OFF-state; both are in the forward ON-state; and both are in the reverse ON-state. In addition, the controller 33 controls the bidirectional switches TSW so that the second high-side bidirectional switch HS2 and the third high-side bidirectional switch HS3 are in any of the following states: either one of the bidirectional switches TSW is in the OFF-state; both are in the forward ON-state; and both are in the reverse ON-state.

More specifically, in sector 4b', the controller 33 controls the bidirectional switches TSW as follows.

As illustrated in Fig. 12, for the period from time t1' to time t6 of sector 4a', the controller 33 causes the twenty-fifth switch device S25 of the third high-side bidirectional switch HS3 to be in the OFF-state. Time t1' is a time after time t1 and before time t2.

Thus, for the period from time t1' to time t3, the third high-side bidirectional switch HS3 is in the forward ON-state. For the period from time t3 to time t6, the third high-side bidirectional switch HS3 is in the OFF-state. In contrast, for the period from time t1' to time t2, the second high-side bidirectional switch HS2 is in the OFF-state. For the period from time t2 to time t4, the second high-side bidirectional switch HS2 is in the forward ON-state.

For the period from time t8' to time t13 of sector 4b', the controller 33 causes the twelfth switch device S12 of the third low-side bidirectional switch LS3 to be in the OFF-state. Time t8' is a time after time t8 and before time t9.

Thus, for the period from time t8' to time t10, the third low-side bidirectional switch LS3 is in the reverse ON-state. For the period from time t10 to time t13, the third low-side bidirectional switch LS3 is in the OFF-state. In contrast, for the period from time t8' to time t9, the second low-side bidirectional switch LS2 is in the OFF-state. For the period from time t9 to time t11, the second low-side bidirectional switch LS2 is in the reverse ON-state.

(4-5. About Other Switching Patterns)

The switching patterns in sector 2, sector 3, sector 5, and sector 6 are defined in substantially the same manner as those in the example for sector 1 and the example for sector 4. That is, the switching patterns are defined from the magnitude relationship between the voltages illustrated in Fig. 2, the vector sequences illustrated in Figs. 3 and 4, and the combinations of switch devices in complementary switching control in Figs. 13 and 14.

Therefore, in sector 2a' and sector 5b', that is, the third specific period, the controller 33 controls the first low-side bidirectional switch LS1 and the second low-side bidirectional switch LS2 so that the ON/OFF states of the bidirectional switches TSW are switched without an overlap between the state, in which the first low-side bidirectional switch LS1 allows a current to flow from the second output terminal 32B to the first input terminal 31A, and the state, in which the second low-side bidirectional switch LS2 allows a current to flow from the second input terminal 31B to the second output terminal 32B.

In addition, in the third specific period, the controller 33 controls the second high-side bidirectional switch HS2 and the first high-side bidirectional switch HS1 so that the ON/OFF states of the bidirectional switches TSW are switched without an overlap between the state, in which the second high-side bidirectional switch HS2 allows a current to flow from the second input terminal 31B to the first output terminal 32A, and the state, in which the first high-side bidirectional switch HS1 allows a current to flow from the first output terminal 32A to the first input terminal 31A.

In sector 2b' and sector 5a', that is, the fourth specific period, the controller 33 controls the first low-side bidirectional switch LS1 and the second low-side bidirectional switch LS2 so that the ON/OFF states of the bidirectional switches TSW are switched without an overlap between the state, in which the first low-side bidirectional switch LS1 allows a current to flow from the first input terminal 31A to the second output terminal 32B, and the state, in which the second low-side bidirectional switch LS2 allows a current to flow from the second output terminal 32B to the second input terminal 31B.

In addition, in the fourth specific period, the controller 33 controls the second high-side bidirectional switch HS2 and the first high-side bidirectional switch HS1 so that the ON/OFF states of the bidirectional switches TSW are switched without an overlap between the state, in which the second high-side bidirectional switch HS2 allows a current to flow from the first output terminal 32A to the second input terminal 31B, and the state, in which the first high-side bidirectional switch HS1 allows a current to flow from the first input terminal 31A to the first output terminal 32A.

In sector 3a' and sector 6b', that is, the fifth specific period, the controller 33 controls the first low-side bidirectional switch LS1 and the third low-side bidirectional switch LS3 so that the ON/OFF states of the bidirectional switches TSW are switched without an overlap between the state, in which the first low-side bidirectional switch LS1 allows a current to flow from the second output terminal 32B to the first input terminal 31A, and the state, in which the third low-side bidirectional switch LS3 allows a current to flow from the third input terminal 31C to the second output terminal 32B.

In addition, in the fifth specific period, the controller 33 controls the third high-side bidirectional switch HS3 and the first high-side bidirectional switch HS1 so that the ON/OFF states of the bidirectional switches TSW are switched without an overlap between the state, in which the third high-side bidirectional switch HS3 allows a current to flow from the third input terminal 31C to the first output terminal 32A, and the state, in which the first high-side bidirectional switch HS1 allows a current to flow from the first output terminal 32A to the first input terminal 31A.

In sector 3b' and sector 6a', that is, the sixth specific period, the controller 33 controls the first low-side bidirectional switch LS1 and the third low-side bidirectional switch LS3 so that the ON/OFF states of the bidirectional switches TSW are switched without an overlap between the state, in which the first low-side bidirectional switch LS1 allows a current to flow from the first input terminal 31A to the second output terminal 32B, and the state, in which the third low-side bidirectional switch LS3 allows a current to flow from the second output terminal 32B to the third input terminal 31C.

In addition, in the sixth specific period, the controller 33 controls the third high-side bidirectional switch HS3 and the first high-side bidirectional switch HS1 so that the ON/OFF states of the bidirectional switches TSW are switched without an overlap between the state, in which the third high-side bidirectional switch HS3 allows a current to flow from the first output terminal 32A to the third input terminal 31C, and the state, in which the first high-side bidirectional switch HS1 allows a current to flow from the first input terminal 31A to the first output terminal 32A.

(5. Comparison with Related Art)

Comparison with a power conversion circuit of the related art will be described below by taking, as an example, the periods of sector 1a', sector 1b', sector 4a', and sector 4b'.

In the power conversion circuit of the related art, the periods of sector na' and sector nb' are not defined. Specifically, in the related art, the periods are defined as follows where n is an integer greater than or equal to one and less than or equal to six, and the phase of the first voltage VA is represented by "$\theta°$". The midpoint value in the period of sector n is X°. However, in the definition of sector 4a and sector 4a', X° = 180°.

- Sector na: $(X° - 30°) \leq \theta° < X°$
- Sector nb: $X° \leq \theta° < (X° + 30°)$

For example, the boundary between sector 1a and sector 1b, X° = 0°, is a time when the magnitude relationship between the second voltage VB and the third voltage VC is transposed. However, noise superimposed on the phase voltages may cause the time of transposition of the magnitude relationship between the voltages to be shifted with respect to the time of transposition in the ideal state. That is, in the range greater than or equal to -30° and less than 0°, although the third voltage VC is originally greater than or equal to the second voltage VB, the second voltage VB is sometimes greater than or equal to the third voltage VC. In addition, in the range greater than or equal to 0° and less than 30°, although the second voltage VB is originally greater than or equal to the third voltage VC, the third voltage VC is sometimes greater than or equal to second voltage VB. In this case, as described below, a current may flow through an unintended path.

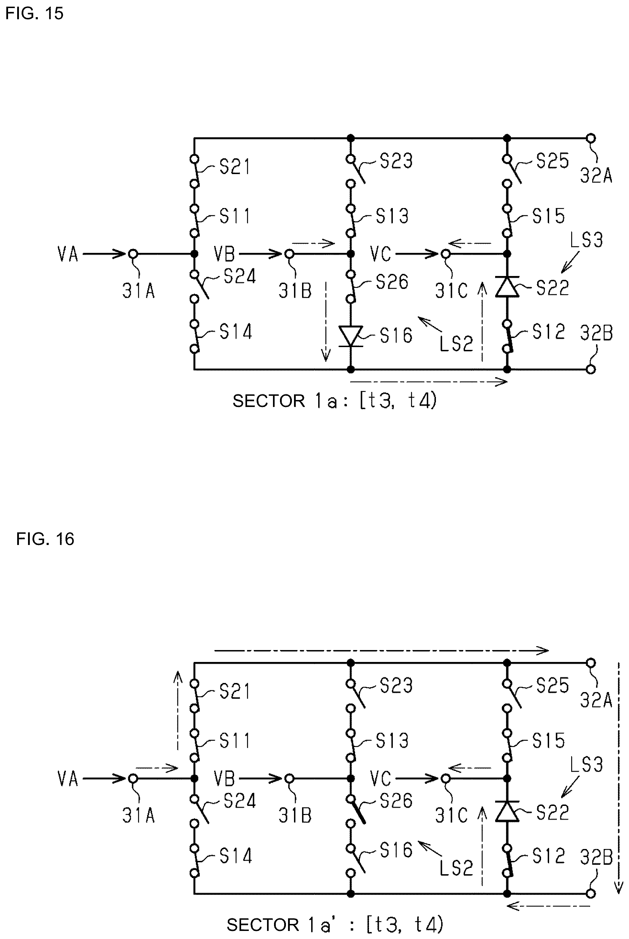

Figs. 15 to 30 schematically illustrate the switch devices included in the bidirectional switches TSW. That is, for the sake of convenience, the switch devices are illustrated as single-pole single-throw (SPST) switches. In the case of conduction of the body diode of a switch device, for the sake of convenience, only the diode is illustrated.

(5-1. Comparison in Period of Sector 1a')

In the period greater than or equal to -30° and less than 0°, the second voltage VB is less than the third voltage VC in the ideal state. However, noise superimposed on the voltages may make the second voltage VB greater than the third voltage VC.

In the power conversion circuit of the related art, in the period from time t2 to time t5 of sector 1a, that is, in the period in which the twelfth switch device S12 of the third low-side bidirectional switch LS3 is in the ON-state and the twenty-sixth switch device S26 of the second low-side bidirectional switch LS2 is in the ON-state, when the second voltage VB is greater than the third voltage VC, a current may flow through an unintended path.

In addition, in the power conversion circuit of the related art, in the period from time t10 to time t11 of sector 1a, that is, in the period in which the twenty-fifth switch device S25 of the third high-side bidirectional switch HS3 is in the ON-state and the thirteenth switch device S13 of the second high-side bidirectional switch HS2 is in the ON-state, when the second voltage VB is greater than the third voltage VC, a current may flow through an unintended path.

By taking, as an example, the period from time t3 to time t4 of sector 1a and the period from time t10 to time t11, comparison between control of the related art and control of the present embodiment will be described below.

As illustrated in Fig. 15, in the case of the power conversion circuit of the related art, for the period from time t3 to time t4, the second low-side bidirectional switch LS2 is in the reverse ON-state and the third low-side bidirectional switch LS3 is in the forward ON-state. Therefore, when the second voltage VB is greater than the third voltage VC, a current flows through the path of conduction from the second low-side bidirectional switch LS2 to the third low-side bidirectional switch LS3.

In contrast, as illustrated in Fig. 16, the controller 33 of the present embodiment causes the twenty-sixth switch device S26 of the second low-side bidirectional switch LS2 to enter the OFF-state at time t1' of sector 1a'. That is, the second low-side bidirectional switch LS2 does not allow a current to flow from the second input terminal 31B to the second output terminal 32B. Therefore, in the period from time t3 to time t4, even when the second voltage VB is greater than the third voltage VC, a current is prevented from flowing through the unintended path.

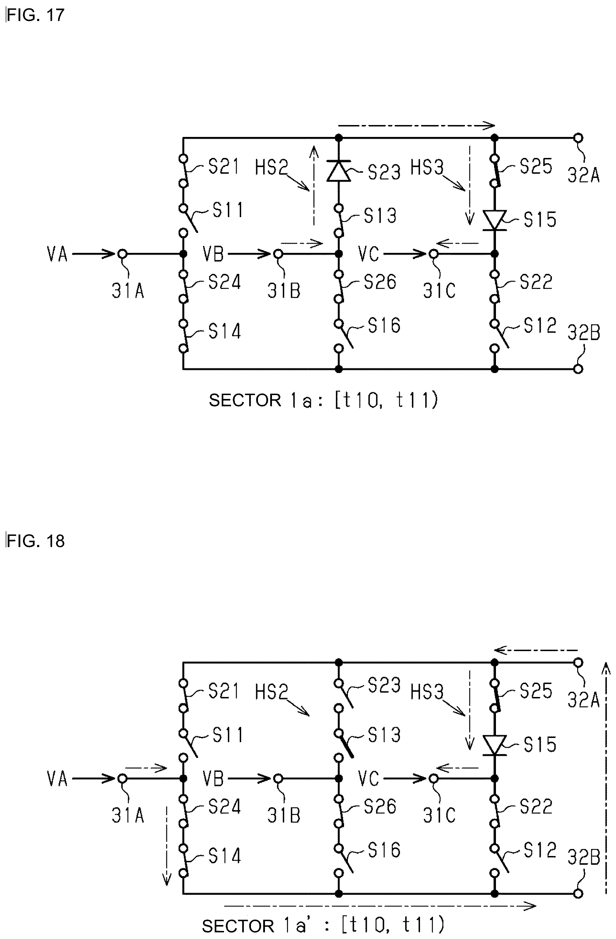

As illustrated in Fig. 17, in the case of the power conversion circuit of the related art, for the period from time t10 to time t11, the second high-side bidirectional switch HS2 is in the forward ON-state and the third high-side bidirectional switch HS3 is in the reverse ON-state. Therefore, when the second voltage VB is greater than the third voltage VC, a current flows through the path of conduction from the second high-side bidirectional switch HS2 to the third high-side bidirectional switch HS3.

In contrast, as illustrated in Fig. 18, the controller 33 of the present embodiment causes the thirteenth switch device S13 of the second high-side bidirectional switch HS2 to enter the OFF-state at time t8' of sector 1a'. That is, the second high-side bidirectional switch HS2 does not allow a current to flow from the second input terminal 31B to the first output terminal 32A. Thus, in the period from time t10 to time t11, even when the second voltage VB is greater than the third voltage VC, a current is prevented from flowing through the unintended path.

(5-2. Comparison in Period of Sector 1b')

In the period greater than or equal to 0° and less than 30°, the third voltage VC is less than or equal to the second voltage VB in the ideal state. However, noise superimposed on the voltages may make the third voltage VC greater than the second voltage VB.

In the power conversion circuit of the related art, in the period from time t2 to time t5 of sector 1b, that is, in the period in which the sixteenth switch device S16 of the second low-side bidirectional switch LS2 is in the ON-state and the twenty-second switch device S22 of the third low-side bidirectional switch LS3 is in the ON-state, when the third voltage VC is greater than the second voltage VB, a current may flow through an unintended path.

In addition, in the power conversion circuit of the related art, in the period from time t10 to time t11 of sector 1b, that is, in the period in which the twenty-third switch device S23 of the second high-side bidirectional switch HS2 is in the ON-state and the fifteenth switch device S15 of the third high-side bidirectional switch HS3 is in the ON-state, when the third voltage VC is greater than the second voltage VB, a current may flow through an unintended path.

By taking, as an example, the period from time t3 to time t4 of sector 1b and the period from time t10 to time t11, comparison between control of the related art and control of the present embodiment will be described below.

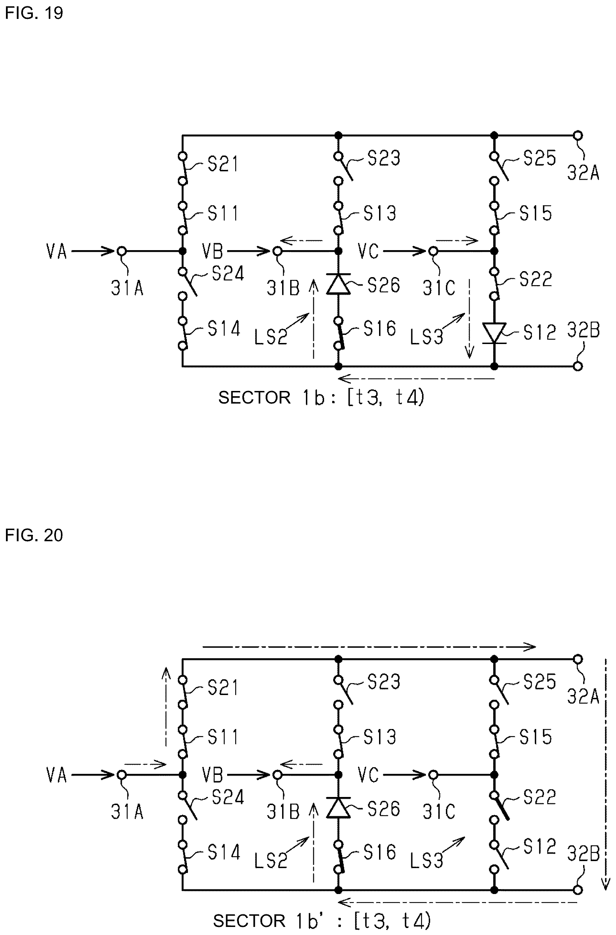

As illustrated in Fig. 19, in the case of the power conversion circuit of the related art, for the period from time t3 to time t4, the second low-side bidirectional switch LS2 is in the forward ON-state, and the third low-side bidirectional switch LS3 is in the reverse ON-state. Therefore, when the third voltage VC is greater than the second voltage VB, a current flows through the path of conduction from the third low-side bidirectional switch LS3 to the second low-side bidirectional switch LS2.

In contrast, as illustrated in Fig. 20, the controller 33 of the present embodiment causes the twenty-second switch device S22 of the third low-side bidirectional switch LS3 to enter the OFF-state at time t1' of sector 1b'. That is, the third low-side bidirectional switch LS3 does not allow a current to flow from the third input terminal 31C to the second output terminal 32B. Therefore, in the period from time t3 to time t4, even when the third voltage VC is greater than the second voltage VB, a current is prevented from flowing through the unintended path.

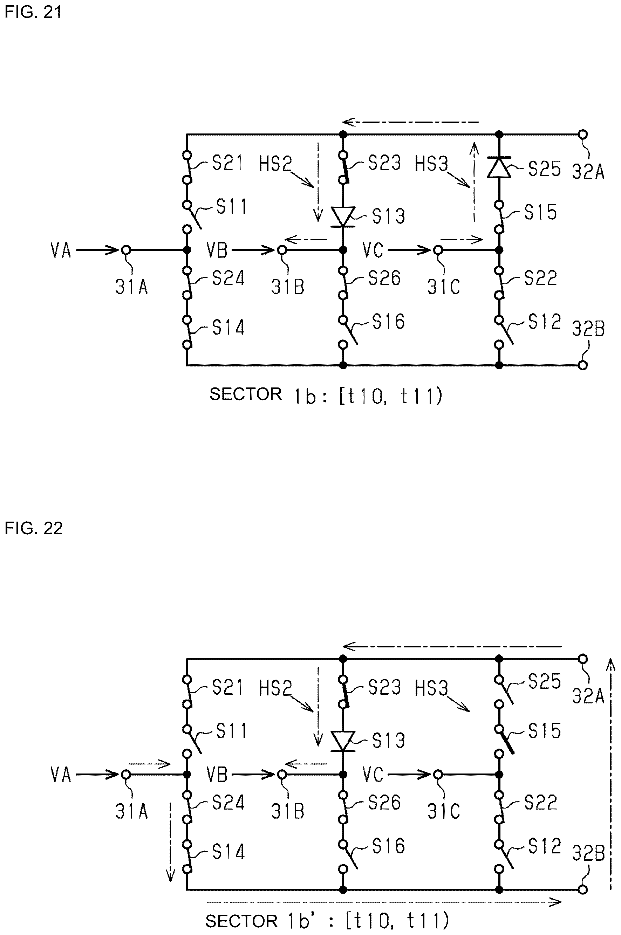

As illustrated in Fig. 21, in the case of the power conversion circuit of the related art, for the period from time t10 to time t11, the second high-side bidirectional switch HS2 is in the reverse ON-state, and the third high-side bidirectional switch HS3 is in the forward ON-state. Therefore, when the third voltage VC is greater than the second voltage VB, a current flows through the path of conduction from the third high-side bidirectional switch HS3 to the second high-side bidirectional switch HS2.

In contrast, as illustrated in Fig. 22, the controller 33 of the present embodiment causes the fifteenth switch device S15 of the third high-side bidirectional switch HS3 to enter the OFF-state at time t8' of sector 1b'. That is, the third high-side bidirectional switch HS3 does not allow a current to flow from the third input terminal 31C to the first output terminal 32A. Therefore, in the period from time t10 to time t11, even when the third voltage VC is greater than the second voltage VB, a current is prevented from flowing through the unintended path.

(5-3. Comparison in Period of Sector 4a')

In the period greater than or equal to 150° and less than 180°, the third voltage VC is less than the second voltage VB in the ideal state. However, noise superimposed on the voltages may make the third voltage VC greater than the second voltage VB.

In the power conversion circuit of the related art, in the period from time t2 to time t5 of sector 4a, that is, in the period in which the fifteenth switch device S15 of the third high-side bidirectional switch HS3 is in the ON-state and the twenty-third switch device S23 of the second high-side bidirectional switch HS2 is in the ON-state, when the third voltage VC is greater than the second voltage VB, a current may flow through an unintended path.

In addition, in the power conversion circuit of the related art, in the period from time t10 to time t11 of sector 4a, that is, in the period in which the twenty-second switch device S22 of the third low-side bidirectional switch LS3 is in the ON-state and the sixteenth switch device S16 of the second low-side bidirectional switch LS2 is in the ON-state, when the third voltage VC is greater than the second voltage VB, a current may flow through an unintended path.

By taking, as an example, the period from time t3 to time t4 of the sector 4a and the period from time t10 to time t11, comparison between control of the related art and control of the present embodiment will be described below.

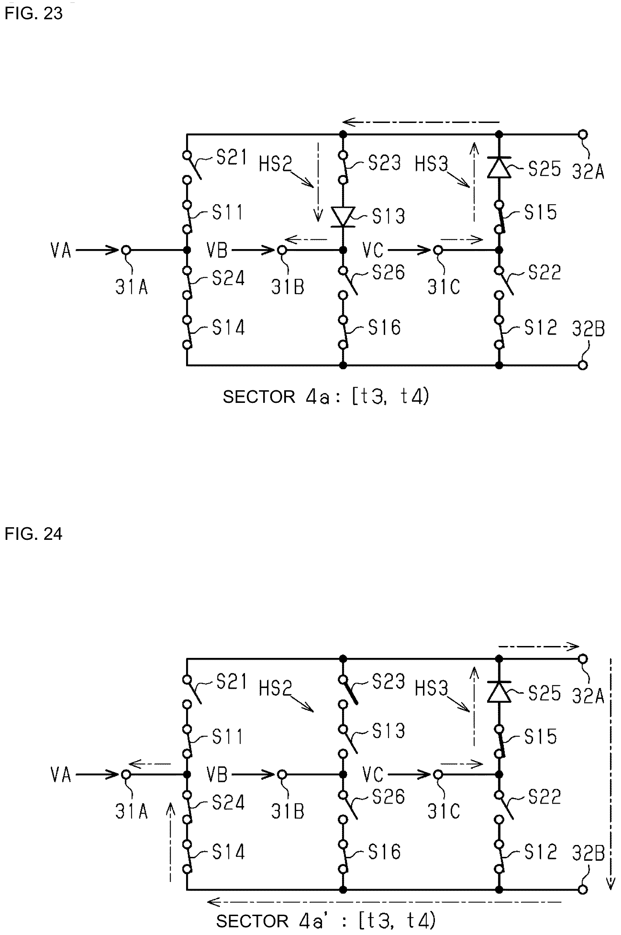

As illustrated in Fig. 23, in the case of the power conversion circuit of the related art, for the period from time t3 to time t4, the second high-side bidirectional switch HS2 is in the reverse ON-state, and the third high-side bidirectional switch HS3 is in the forward ON-state. Therefore, when the third voltage VC is greater than the second voltage VB, a current flows through the path of conduction from the third high-side bidirectional switch HS3 to the second high-side bidirectional switch HS2.

In contrast, as illustrated in Fig. 24, the controller 33 of the present embodiment causes the twenty-third switch device S23 of the second high-side bidirectional switch HS2 to enter the OFF-state at time t1' of sector 4a'. That is, the second high-side bidirectional switch HS2 does not allow a current to flow from the first output terminal 32A to the second input terminal 31B. Therefore, in the period from time t3 to time t4, even when the third voltage VC is greater than the second voltage VB, a current is prevented from flowing through the unintended path.

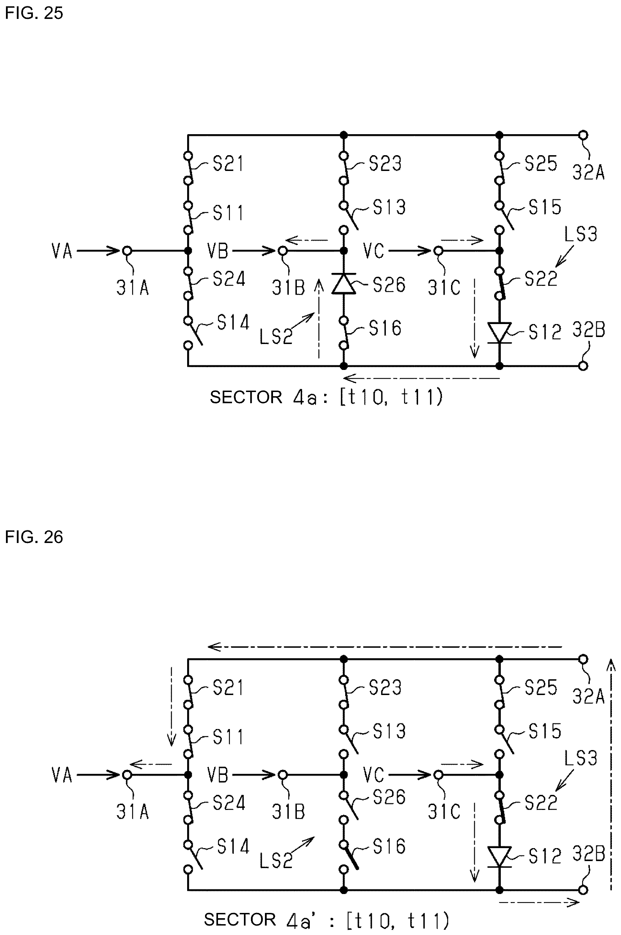

As illustrated in Fig. 25, in the case of the power conversion circuit of the related art, for the period from time t10 to time t11, the second low-side bidirectional switch LS2 is in the forward ON-state, and the third low-side bidirectional switch LS3 is in the reverse ON-state. Therefore, when the third voltage VC is greater than the second voltage VB, a current flows through the path of conduction from the third low-side bidirectional switch LS3 to the second low-side bidirectional switch LS2.

In contrast, as illustrated in Fig. 26, the controller 33 of the present embodiment causes the sixteenth switch device S16 of the second low-side bidirectional switch LS2 to enter the OFF-state at time t8' of sector 4a'. That is, the second low-side bidirectional switch LS2 does not allow a current to flow from the second output terminal 32B to the second input terminal 31B. Therefore, in the period from time t10 to time t11, even when the third voltage VC is greater than the second voltage VB, a current is prevented from flowing through the unintended path.

(5-4. Comparison in Period of Sector 4b')

In the period greater than or equal to -180° and less than -150°, the second voltage VB is less than or equal to the third voltage VC in the ideal state. However, noise superimposed on the voltages may make the second voltage VB greater than the third voltage VC.

In the power conversion circuit of the related art, in the period from time t2 to time t5 of sector 4b, that is, in the period in which the thirteenth switch device S13 of the second high-side bidirectional switch HS2 is in the ON-state and the twenty-fifth switch device S25 of the third high-side bidirectional switch HS3 is in the ON-state, when the second voltage VB is greater than the third voltage VC, a current may flow through an unintended path.

In addition, in the power conversion circuit of the related art, in the period from time t10 to time t11 of sector 4b, that is, in the period in which the twenty-sixth switch device S26 of the second low-side bidirectional switch LS2 is in the ON-state and the twelfth switch device S12 of the third low-side bidirectional switch LS3 is in the ON-state, when the second voltage VB is greater than the third voltage VC, a current may flow through an unintended path.

By taking, as an example, the period from time t3 to time t4 of sector 4b and the period from time t10 to time t11, comparison between control of the related art and control of the present embodiment will be described below.

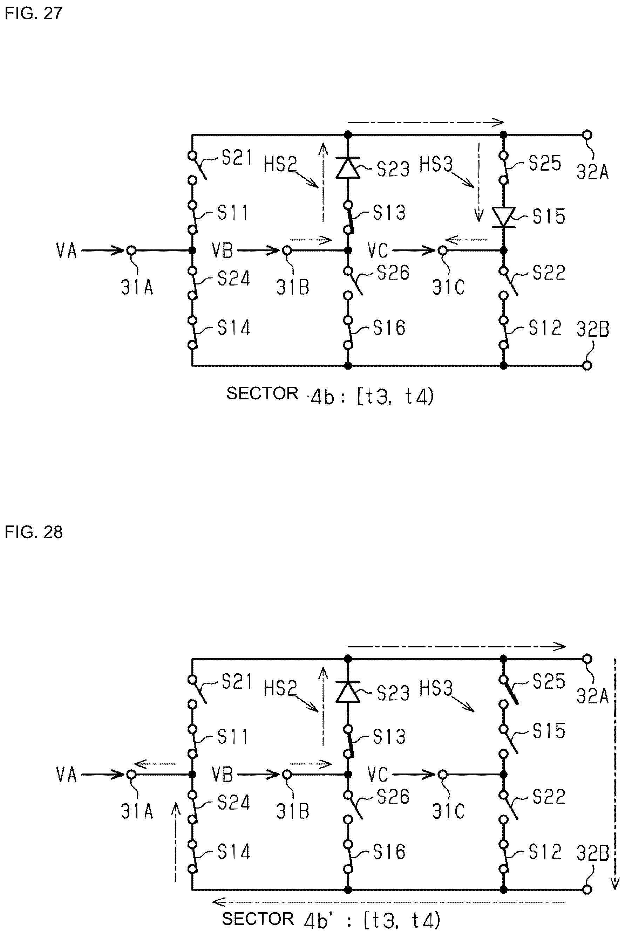

As illustrated in Fig. 27, in the case of the power conversion circuit of the related art, for the period from time t3 to time t4, the second high-side bidirectional switch HS2 is in the forward ON-state, and the third high-side bidirectional switch HS3 is in the reverse ON-state. Therefore, when the second voltage VB is greater than the third voltage VC, a current flows through the path of conduction from the second high-side bidirectional switch HS2 to the third high-side bidirectional switch HS3.

In contrast, as illustrated in Fig. 28, the controller 33 of the present embodiment causes the twenty-fifth switch device S25 of the third high-side bidirectional switch HS3 to enter the OFF-state at time t1' of sector 4b'.

That is, the third high-side bidirectional switch HS3 does not allow a current to flow from the first output terminal 32A to the third input terminal 31C. Therefore, in the period from time t3 to time t4, even when the second voltage VB is greater than the third voltage VC, a current is prevented from flowing through the unintended path.

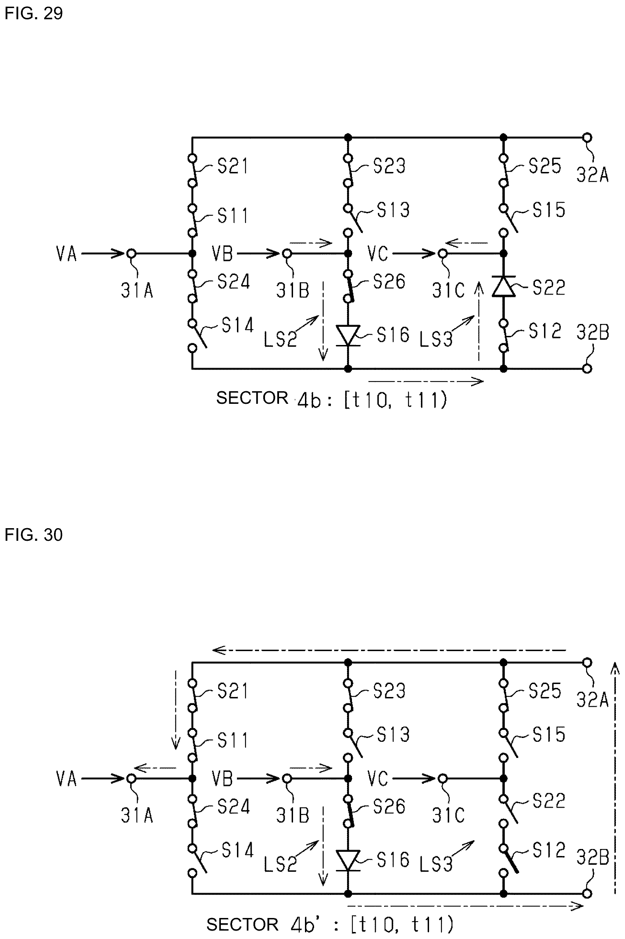

As illustrated in Fig. 29, in the case of the power conversion circuit of the related art, for the period from time t10 to time t11, the second low-side bidirectional switch LS2 is in the reverse ON-state, and the third low-side bidirectional switch LS3 is in the forward ON-state. Therefore, when the second voltage VB is greater than the third voltage VC, a current flows through the path of conduction from the second low-side bidirectional switch LS2 to the third low-side bidirectional switch LS3.

In contrast, as illustrated in Fig. 30, the controller 33 of the present embodiment causes the twelfth switch device S12 of the third low-side bidirectional switch LS3 to enter the OFF-state at time t8' of sector 4b'. That is, the third low-side bidirectional switch LS3 does not allow a current to flow from the second output terminal 32B to the third input terminal 31C. Therefore, in the period from time t10 to time t11, even when the second voltage VB is greater than the third voltage VC, a current is prevented from flowing through the unintended path.

(5-5. About Other Specific Periods)

Also in the third specific period to the sixth specific period, even when noise superimposed on the voltages causes the magnitude relationship between voltages in the ideal state to be transposed, like the first specific period and the second specific period, a current is prevented from flowing through an unintended path.

(6. About Effects of Present Embodiment)

(1) According to the embodiment, the controller 33 controls the bidirectional switches TSW in accordance with the magnitude relationship among the first voltage VA, the second voltage VB, and the third voltage VC. In addition, in the specific periods, the controller 33 performs the complementary switching control. Therefore, even when noise is superimposed on the phase voltages, a current is prevented from flowing through an unintended path.

(2) According to the embodiment, a specific period is determined within the range greater than or equal to (X° - 3°) and less than or equal to X° and within the range greater than or equal to (X° + 180°) and less than or equal to (X° + 183°). A specific period is determined within the range greater than or equal to X° and less than or equal to (X° + 3°) and within the range greater than or equal to (X° + 177°) and less than or equal to (X° + 180°). Further, the specific periods include X° and (X° + 180°). Such range periods are sections in which the magnitude relationship between voltages is easily transposed due to superimposed noise. Therefore, provision of the specific periods in the range periods easily prevents a current from flowing through an unintended path. In the specific periods, the number of ON-OFF switching actions of the switch devices increases. Therefore, narrowing the specific periods to the range periods achieves suppression of switching loss.

(3) According to the embodiment, each bidirectional switch TSW has two switch devices which are connected in series to each other so that the anode-side terminals of the body diodes are connected to each other. According to this configuration, the power conversion circuit 30 may be configured in a relatively easy manner and at low cost.

(4) According to the embodiment, the power conversion device 10 is a three-phase isolated converter. The controller 33 performs zero voltage switching. This configuration is preferable as a circuit configuration which performs complementary switching control.

<Modified Examples>

The embodiment and modified examples described below may be carried out by combining one another in a range without technical contradiction.

(About Modified Examples of Power Conversion Device)

. The configuration of the power conversion device 10 is not limited to the example of the embodiment. For example, the power conversion device 10 may be applied not only to a three-phase isolated AC-DC converter, but also to a non-isolated three-phase alternating-current AC-DC converter. That is, the power conversion device 10 does not necessarily include one or more selected from the input-side low-pass filter 20, the transformer circuit 40, the rectifier circuit 50, and the output-side low-pass filter 60.

The three-phase AC power supply 80 connected to the three external input terminals 11 is not limited to a three-phase three-wire type, and may be a three-phase four-wire type or a delta-connected three-phase AC power supply 80 of three-phase three-wire type. The configuration of the power conversion device 10 may be appropriately changed in accordance with the type of the three-phase AC power supply 80.

The input-side low-pass filter 20 may include multiple capacitors connected between lines for the phases which receive the first voltage VA, the second voltage VB, and the third voltage VC.

· The switch devices included in each bidirectional switch TSW are not limited to the example of the embodiment. For example, the two switch devices included in each bidirectional switch TSW may be P-channel MOSFETs. In this case, in each bidirectional switch TSW, the drain terminals of the two switch devices are connected to each other.

The two switch devices included in each bidirectional switch TSW may be transistors which allow a current to flow in the forward direction and allow a current to flow in the reverse direction. In this case, the two switch devices are connected in series to each other so that the source terminals are connected to each other. Specifically, the switch devices are GaN-high electron mobility transistors (GaN-HEMTs).

· The transformer circuit 40 does not necessarily include the fourth inductor L4. In this case, instead of the fourth inductor L4, leak inductance of the transformer 41 may be used for resonance.

· The specific circuit configuration of the rectifier circuit 50 is not limited to the example of the embodiment. For example, the rectifier circuit 50 may be, for example, a half-wave rectifier circuit.

(About Modified Examples of Definition or the Like of Sectors)

· As long as the first specific period, the third specific period, and the fifth specific period are determined within the range greater than or equal to (X° - 30°) and less than or equal to X° and within the range greater than or equal to (X° + 180°) and less than or equal to (X° + 210°), the configuration is not limited to the periods described in the embodiment. As long as the second specific period, the fourth specific period, and the sixth specific period are determined within the range greater than or equal to X° and less than or equal to (X° + 30°) and within the range greater than or equal to (X° + 150°) and less than or equal to (X° + 180°), the configuration is not limited to the periods described in the embodiment. That is, the first specific period, the third specific period, and the fifth specific period are not necessarily determined within the range greater than or equal to (X° - 3°) and less than or equal to X° and within the range greater than or equal to (X° + 180°) and less than or equal to (X° + 183°). The second specific period, the fourth specific period, and the sixth specific period are not necessarily determined within the range greater than or equal to X° and less than or equal to (X° + 3°) and within the range greater than or equal to (X° + 177°) and less than or equal to (X° + 180°). However, adjacent specific periods are necessarily determined so that the ranges do not overlap each other.

Any configuration may be employed as long as at least one of the specific periods of the first specific period, the third specific period, and the fifth specific period is determined at least once in a single cycle of three-phase AC power. In addition, any configuration may be employed as long as at least one of the specific periods of the second specific period, the fourth specific period, and the sixth specific period is determined at least once in a single cycle of three-phase AC power.

For example, the first specific period may be a range greater than or equal to -30° and less than or equal to 0°, and the second specific period may be greater than 0° and less than 30°. In addition, in a certain cycle, the period of sector 1a' and the period of sector 4a' may have different period lengths. In this point, the same is true for the second specific period to the sixth specific period.

· In the embodiment, among the three input terminals 31 included in the power conversion circuit 30, which input terminal 31 corresponds to which input terminal among the first input terminal 31A, the second input terminal 31B, and the third input terminal 31C may be appropriately changed.

· The expression, "in a predetermined specific period", means that, until each specific period is entered, the period has been determined. For example, even if, in a certain cycle, the first specific period is greater than or equal to -3° and less than 0°, the first specific period may be determined, for example, to be greater than or equal to - 6° and less than 0°, before the first specific period is entered in the next cycle.

· The controller 33 may have a configuration which allows the lengths of the specific periods to be changed in accordance with the driving state or the like of the power conversion device 10. For example, within a predetermined certain period from the start of driving of the controller 33, the controller 33 may make the specific periods longer than those after the certain period has elapsed from the start of driving of the controller 33.

In a certain period from the start of driving of the controller 33, noise is easily superimposed on input voltages from the three-phase AC power supply 80 compared with the case after the certain period has elapsed. That is, the certain period from the start of driving of the controller 33 is preferably used as a period for the state in which the specific periods are determined. Further, the specific periods are made longer in the state. Thus, a current is easily prevented from flowing through an unintended path.

<Appendix>

The technical idea introduced from the embodiment and the modified examples will be described below.

[1] A power conversion circuit comprising:

a first input terminal, a second input terminal, and a third input terminal that are connected to a three-phase AC power supply, and that receive, on a one-to-one basis, a first voltage, a second voltage, and a third voltage which are AC voltages having phases different from one another;
a first output terminal and a second output terminal that are capable of outputting AC power;
a plurality of bidirectional switches; and
a controller that controls each of the plurality of bidirectional switches,
wherein the plurality of bidirectional switches include

a first high-side bidirectional switch that connects the first input terminal and the first output terminal,
a first low-side bidirectional switch that connects the first input terminal and the second output terminal,
a second high-side bidirectional switch that connects the second input terminal and the first output terminal,
a second low-side bidirectional switch that connects the second input terminal and the second output terminal,
a third high-side bidirectional switch that connects the third input terminal and the first output terminal, and
a third low-side bidirectional switch that connects the third input terminal and the second output terminal, and

wherein, where X° represents a phase at which the first voltage reaches a maximum,

in a specific period determined within a period range in which the phase of the first voltage is greater than or equal to (X° - 30°) and less than or equal to X° and within a period range in which the phase of the first voltage is greater than or equal to (X° + 180°) and less than or equal to (X° + 210°), the controller controls the third low-side bidirectional switch and the second low-side bidirectional switch to switch ON/OFF states of the bidirectional switches without an overlap between a first state and a second state, the first state being a state in which the third low-side bidirectional switch allows a current to flow from the second output terminal to the third input terminal, the second state being a state in which the second low-side bidirectional switch allows a current to flow from the second input terminal to the second output terminal, and the controller controls the second high-side bidirectional switch and the third high-side bidirectional switch to switch the ON/OFF states of the bidirectional switches without an overlap between a third state and a fourth state, the third state being a state in which the second high-side bidirectional switch allows a current to flow from the second input terminal to the first output terminal, the fourth state being a state in which the third high-side bidirectional switch allows a current to flow from the first output terminal to the third input terminal.

[2] A power conversion circuit comprising:

a first input terminal, a second input terminal, and a third input terminal that are connected to a three-phase AC power supply, and that receive, on a one-to-one basis, a first voltage, a second voltage, and a third voltage which are AC voltages having phases different from one another;
a first output terminal and a second output terminal that are capable of outputting AC power;
a plurality of bidirectional switches; and
a controller that controls each of the plurality of bidirectional switches,
wherein the plurality of bidirectional switches include

a first high-side bidirectional switch that connects the first input terminal and the first output terminal,
a first low-side bidirectional switch that connects the first input terminal and the second output terminal,
a second high-side bidirectional switch that connects the second input terminal and the first output terminal,
a second low-side bidirectional switch that connects the second input terminal and the second output terminal,
a third high-side bidirectional switch that connects the third input terminal and the first output terminal, and
a third low-side bidirectional switch that connects the third input terminal and the second output terminal, and

wherein, where X° represents a phase at which the first voltage reaches a maximum,

in a specific period predetermined within a period range in which the phase of the first voltage is greater than or equal to X° and less than or equal to (X° + 30°) and within a period range in which the phase of the first voltage is greater than or equal to (X° + 150°) and less than or equal to (X° + 180°), the controller controls the third low-side bidirectional switch and the second low-side bidirectional switch to switch ON/OFF states of the bidirectional switches without an overlap between a first state and a second state, the first state being a state in which the third low-side bidirectional switch allows a current to flow from the third input terminal to the second output terminal, the second state being a state in which the second low-side bidirectional switch allows a current to flow from the second output terminal to the second input terminal, and

the controller controls the second high-side bidirectional switch and the third high-side bidirectional switch to switch the ON/OFF states of the bidirectional switches without an overlap between a third state and a fourth state, the third state being a state in which the second high-side bidirectional switch allows a current to flow from the first output terminal to the second input terminal, the fourth state being a state in which the third high-side bidirectional switch allows a current to flow from the third input terminal to the first output terminal.

[3] The power conversion circuit according to [1], wherein the specific period is determined within a period range in which the phase of the first voltage is greater than or equal to (X° - 3°) and less than or equal to X° and within a period range in which the phase of the first voltage is greater than or equal to (X ° + 180°) and less than or equal to (X° + 183°).

[4] The power conversion circuit according to [2], wherein the specific period is determined within a period range in which the phase of the first voltage is greater than or equal to X° and less than or equal to (X° + 3°) and within a period range in which the phase of the first voltage is greater than or equal to (X° + 177°) and less than or equal to (X° + 180°).

[5] The power conversion circuit according to any one of [1] to [4],

wherein the specific period includes a time point at which the phase of the first voltage is X° and a time point at which the phase of the first voltage is (X° + 180°).

[6] The power conversion circuit according to any one of [1] to [5],

wherein each bidirectional switch has two switch devices which are connected in series in such a manner that anode-side terminals of body diodes are connected to each other.

[7] The power conversion circuit according to any one of [1] to [5],

wherein each bidirectional switch has two switch devices which are connected in series in such a manner that source terminals are connected to each other, and

wherein each switch device is a transistor which allows a current to flow in a forward direction and which allows a current to flow in a reverse direction.

[8] The power conversion circuit according to any one of [1] to [7],

wherein, within a predetermined certain period from start of driving of the controller, the controller makes the specific period longer than a case after the certain period elapses from the start of driving of the controller.

[9] A power conversion device comprising:

the power conversion circuit according to any one of [1] to [8];

a transformer that has a primary winding and a secondary winding, the primary winding having a first end connected to the first output terminal, the primary winding having a second end connected to the second output terminal; and

a rectifier circuit that is connected to the secondary winding.

Reference Signs List

| | |
|---|---|
| 10 | power conversion device |
| 30 | power conversion circuit |
| 31A | first input terminal |
| 31B | second input terminal |
| 31C | third input terminal |
| VA | first voltage |
| VB | second voltage |
| VC | third voltage |
| 32A | first output terminal |
| 32B | second output terminal |
| 33 | controller |
| TSW | bidirectional switch |
| HS1 | first high-side bidirectional switch |
| LS1 | first low-side bidirectional switch |
| HS2 | second high-side bidirectional switch |
| LS2 | second low-side bidirectional switch |
| HS3 | third high-side bidirectional switch |
| LS3 | third low-side bidirectional switch |
| 41 | transformer |
| 41A | primary winding |
| 41B | secondary winding |
| 50 | rectifier circuit |

## Claims

1. A power conversion circuit comprising:

a first input terminal, a second input terminal, and a third input terminal that are connected to a three-phase AC power supply, and that receive, on a one-to-one basis, a first voltage, a second voltage, and a third voltage which are AC voltages having phases different from one another;
a first output terminal and a second output terminal that are capable of outputting AC power;
a plurality of bidirectional switches; and
a controller that controls each of the plurality of bidirectional switches,
wherein the plurality of bidirectional switches include

a first high-side bidirectional switch that connects the first input terminal and the first output terminal,
a first low-side bidirectional switch that connects the first input terminal and the second output terminal,
a second high-side bidirectional switch that connects the second input terminal and the first output terminal,
a second low-side bidirectional switch that connects the second input terminal and the second output terminal,
a third high-side bidirectional switch that connects the third input terminal and the first output terminal, and
a third low-side bidirectional switch that connects the third input terminal and the second output terminal, and

wherein, where X° represents a phase at which the first voltage reaches a maximum,

in a specific period determined within a period range in which the phase of the first voltage is greater than or equal to (X° - 30°) and less than or equal to X° and within a period range in which the phase of the first voltage is greater than or equal to (X° + 180°) and less than or equal to (X° + 210°), the controller controls the third low-side bidirectional switch and the second low-side bidirectional switch to switch ON/OFF states of the bidirectional switches without an overlap between a first state and a second state, the first state being a state in which the third low-side bidirectional switch allows a current to flow from the second output terminal to the third input terminal, the second state being a state in which the second low-side bidirectional switch allows a current to flow from the second input terminal to the second output terminal, and the controller controls the second high-side bidirectional switch and the third high-side bidirectional switch to switch the ON/OFF states of the bidirectional switches without an overlap between a third state and a fourth state, the third state being a state in which the second high-side bidirectional switch allows a current to flow from the second input terminal to the first output terminal, the fourth state being a state in which the third high-side bidirectional switch allows a current to flow from the first output terminal to the third input terminal.

2. A power conversion circuit comprising:

a first input terminal, a second input terminal, and a third input terminal that are connected to a three-phase AC power supply, and that receive, on a one-to-one basis, a first voltage, a second voltage, and a third voltage which are AC voltages having phases different from one another;
a first output terminal and a second output terminal that are capable of outputting AC power;
a plurality of bidirectional switches; and
a controller that controls each of the plurality of bidirectional switches,
wherein the plurality of bidirectional switches include

a first high-side bidirectional switch that connects the first input terminal and the first output terminal,
a first low-side bidirectional switch that connects the first input terminal and the second output terminal,
a second high-side bidirectional switch that connects the second input terminal and the first output terminal,
a second low-side bidirectional switch that connects the second input terminal and the second output terminal,
a third high-side bidirectional switch that connects the third input terminal and the first output terminal, and
a third low-side bidirectional switch that connects the third input terminal and the second output terminal, and

wherein, where X° represents a phase at which the first voltage reaches a maximum,

in a specific period predetermined within a period range in which the phase of the first voltage is greater than or equal to X° and less than or equal to (X° + 30°) and within a period range in which the phase of the first voltage is greater than or equal to (X° + 150°) and less than or equal to (X° + 180°), the controller controls the third low-side bidirectional switch and the second low-side bidirectional switch to switch ON/OFF states of the bidirectional switches without an overlap between a first state and a second state, the first state being a state in which the third low-side bidirectional switch allows a current to flow from the third input terminal to the second output terminal, the second state being a state in which the second low-side bidirectional switch allows a current to flow from the second output terminal to the second input terminal, and
the controller controls the second high-side bidirectional switch and the third high-side bidirectional switch to switch the ON/OFF states of the bidirectional switches without an overlap between a third state and a fourth state, the third state being a state in which the second high-side bidirectional switch allows a current to flow from the first output terminal to the second input terminal, the fourth state being a state in which the third high-side bidirectional switch allows a current to flow from the third input terminal to the first output terminal.

3. The power conversion circuit according to Claim 1, wherein the specific period is determined within a period range in which the phase of the first voltage is greater than or equal to (X° - 3°) and less than or equal to X° and within a period range in which the phase of the first voltage is greater than or equal to (X ° + 180°) and less than or equal to (X° + 183°).

4. The power conversion circuit according to Claim 2, wherein the specific period is determined within a period range in which the phase of the first voltage is greater than or equal to X° and less than or equal to (X° + 3°) and within a period range in which the phase of the first voltage is greater than or equal to (X° + 177°) and less than or equal to (X° + 180°).

5. The power conversion circuit according to any one of Claims 1 to 4,
wherein the specific period includes a time point at which the phase of the first voltage is X° and a time point at which the phase of the first voltage is (X° + 180°).

6. The power conversion circuit according to any one of Claims 1 to 5,
wherein each bidirectional switch has two switch devices which are connected in series in such a manner that anode-side terminals of body diodes are connected to each other.

7. The power conversion circuit according to any one of Claims 1 to 5,

wherein each bidirectional switch has two switch devices which are connected in series in such a manner that source terminals are connected to each other, and
wherein each switch device is a transistor which allows a current to flow in a forward direction and which allows a current to flow in a reverse direction.

8. The power conversion circuit according to any one of Claims 1 to 7,
wherein, within a predetermined certain period from start of driving of the controller, the controller makes the specific period longer than a case after the certain period elapses from the start of driving of the controller.

9. A power conversion device comprising:

the power conversion circuit according to any one of Claims 1 to 8;
a transformer that has a primary winding and a secondary winding, the primary winding having a first end connected to the first output terminal, the primary winding having a second end connected to the second output terminal; and
a rectifier circuit that is connected to the secondary winding.

FIG. 1

FIG. 2

SECTOR 4
SECTOR 5
SECTOR 6
SECTOR 1
SECTOR 2
SECTOR 3
SECTOR 4
a
b
a'
b'
VA
VB
VC
0V
-180°
-150°
-120°
-90°
-60°
-30°
0°
30°
60°
90°
120°
150°
180°

FIG. 3

I3+
LS3
HS2
HS2
LS1
I4+
I2+
HS1
LS3
Ir
ZERO VECTOR
I7
HS1
LS1
LS1
HS3
I5+
I1+
LS2
HS1
I8
HS2
LS2
I9
HS3
LS3
I6+
HS3
LS2

FIG. 4

I3-
HS3
LS2
LS2
HS1
I4-
I2-
LS1
HS3
Ir
ZERO VECTOR
I7
HS1
LS1
HS1
LS3
I5-
I1-
HS2
LS1
I8
HS2
LS2
I9
HS3
LS3
I6-
LS3
HS2

FIG. 5

SECTOR 1a
Ts
HS1
S21
S11
LS1
S24
S14
HS2
S23
S13
LS2
S26
S16
HS3
S25
S15
LS3
S22
S12
t0
t1
t2
t3
t4
t5
t6
t7
t8
t9
t10
t11
t12
t13
t14

FIG. 6

SECTOR 1a'
Ts
HS1
S21
S11
LS1
S24
S14
HS2
S23
S13
LS2
S26
S16
HS3
S25
S15
LS3
S22
S12
t0
t1
t1'
t2
t3
t4
t5
t6
t7
t8
t8'
t9
t10
t11
t12
t13
t14

FIG. 7

SECTOR 1b
Ts
HS1
S21
S11
LS1
S24
S14
HS2
S23
S13
LS2
S26
S16
HS3
S25
S15
LS3
S22
S12
t0
t1
t2
t3
t4
t5
t6
t7
t8
t9
t10
t11
t12
t13
t14

FIG. 8

SECTOR 1b'
Ts
HS1
S21
S11
LS1
S24
S14
HS2
S23
S13
LS2
S26
S16
HS3
S25
S15
LS3
S22
S12
t0
t1
t1'
t2
t3
t4
t5
t6
t7
t8
t8'
t9
t10
t11
t12
t13
t14

FIG. 9

SECTOR 4a
Ts
HS1
S21
S11
LS1
S24
S14
HS2
S23
S13
LS2
S26
S16
HS3
S25
S15
LS3
S22
S12
t0
t1
t2
t3
t4
t5
t6
t7
t8
t9
t10
t11
t12
t13
t14

FIG. 10

SECTOR 4a'
Ts
HS1
S21
S11
LS1
S24
S14
HS2
S23
S13
LS2
S26
S16
HS3
S25
S15
LS3
S22
S12
t0
t1
t1'
t2
t3
t4
t5
t6
t7
t8
t8'
t9
t10
t11
t12
t13
t14

FIG. 11

SECTOR 4b
Ts
HS1
S21
S11
LS1
S24
S14
HS2
S23
S13
LS2
S26
S16
HS3
S25
S15
LS3
S22
S12
t0
t1
t2
t3
t4
t5
t6
t7
t8
t9
t10
t11
t12
t13
t14

FIG. 12

SECTOR 4b'
Ts
HS1
S21
S11
LS1
S24
S14
HS2
S23
S13
LS2
S26
S16
HS3
S25
S15
LS3
S22
S12
t0
t1
t1'
t2
t3
t4
t5
t6
t7
t8
t8'
t9
t10
t11
t12
t13
t14

FIG. 13

| SECTOR | 1 | | 2 | | 3 | |
|---|---|---|---|---|---|---|
| | a | b | a | b | a | b |
| COMPLEMENTARY SWITCHING | S16, S22 | S12, S26 | S24, S16 | S26, S14 | S12, S24 | S14, S22 |
| | S23, S15 | S25, S13 | S11, S23 | S13, S21 | S25, S11 | S21, S15 |
| SECTOR | 4 | | 5 | | 6 | |
| | a | b | a | b | a | b |
| COMPLEMENTARY SWITCHING | S26, S12 | S22, S16 | S14, S26 | S16, S24 | S22, S14 | S24, S12 |
| | S13, S25 | S15, S23 | S21, S13 | S23, S11 | S15, S11 | S11, S25 |

FIG. 14

| SECTOR | 1 | | 2 | | 3 | |
|---|---|---|---|---|---|---|
| | a' | b' | a' | b' | a' | b' |
| ADDITIONAL COMPLEMENTARY SWITCHING | S26, S12 | S22, S16 | S14, S26 | S16, S24 | S22, S14 | S24, S12 |
| | S13, S25 | S15, S23 | S21, S13 | S23, S11 | S15, S21 | S11, S25 |
| SECTOR | 4 | | 5 | | 6 | |
| | a' | b' | a' | b' | a' | b' |
| ADDITIONAL COMPLEMENTARY SWITCHING | S16, S22 | S12, S26 | S24, S16 | S26, S14 | S12, S24 | S14, S22 |
| | S23, S15 | S25, S13 | S11, S23 | S13, S21 | S25, S11 | S21, S15 |

FIG. 15

S21
S23
S25
32A
S11
S13
S15
LS3
VA
VB
VC
31A
S24
31B
S26
31C
S22
S14
S16
LS2
S12
32B

SECTOR 1a : [t3, t4)

FIG. 16

S21
S23
S25
32A
S11
S13
S15
LS3
VA
VB
VC
31A
S24
31B
S26
31C
S22
S14
S16
LS2
S12
32B

SECTOR 1a' : [t3, t4)

FIG. 17

S21
HS2
S23
HS3
S25
32A
S11
S13
S15
VA
VB
VC
31A
S24
31B
S26
31C
S22
S14
S16
S12
32B

SECTOR 1a : [t10, t11)

FIG. 18

S21
HS2
S23
HS3
S25
32A
S11
S13
S15
VA
VB
VC
31A
S24
31B
S26
31C
S22
S14
S16
S12
32B

SECTOR 1a' : [t10, t11)

FIG. 19

S21
S23
S25
32A
S11
S13
S15
VA
VB
VC
31A
S24
31B
S26
31C
S22
S14
LS2
S16
LS3
S12
32B

SECTOR 1b : [t3, t4)

FIG. 20

S21
S23
S25
32A
S11
S13
S15
VA
VB
VC
31A
S24
31B
S26
31C
S22
S14
LS2
S16
LS3
S12
32B

SECTOR 1b' : [t3, t4)

FIG. 21

S21
HS2
S23
HS3
S25
32A
S11
S13
S15
VA
VB
VC
31A
S24
31B
S26
31C
S22
S14
S16
S12
32B
SECTOR 1b : [t10, t11)

FIG. 22

S21
HS2
S23
HS3
S25
32A
S11
S13
S15
VA
VB
VC
31A
S24
31B
S26
31C
S22
S14
S16
S12
32B
SECTOR 1b' : [t10, t11)

FIG. 23

S21
HS2
S23
HS3
S25
32A
S11
S13
S15
VA
VB
VC
31A
S24
31B
S26
31C
S22
S14
S16
S12
32B
SECTOR 4a : [t3, t4)

FIG. 24

S21
HS2
S23
HS3
S25
32A
S11
S13
S15
VA
VB
VC
31A
S24
31B
S26
31C
S22
S14
S16
S12
32B
SECTOR 4a' : [t3, t4)

FIG. 25

S21
S23
S25
32A
S11
S13
S15
LS3
VA
VB
VC
31A
S24
31B
S26
31C
S22
S14
LS2
S16
S12
32B
SECTOR 4a : [t10, t11)

FIG. 26

S21
S23
S25
32A
S11
S13
S15
LS3
VA
VB
VC
31A
S24
31B
S26
31C
S22
S14
LS2
S16
S12
32B
SECTOR 4a' : [t10, t11)

FIG. 27

S21
HS2
S23
HS3
S25
32A
S11
S13
S15
VA
VB
VC
31A
S24
31B
S26
31C
S22
S14
S16
S12
32B

SECTOR 4b : [t3, t4)

FIG. 28

S21
HS2
S23
HS3
S25
32A
S11
S13
S15
VA
VB
VC
31A
S24
31B
S26
31C
S22
S14
S16
S12
32B

SECTOR 4b' : [t3, t4)

FIG. 29

S21
S23
S25
32A
S11
S13
S15
VA
VB
VC
31A
S24
31B
S26
31C
S22
S14
LS2
S16
LS3
S12
32B
SECTOR 4b : [t10, t11)

FIG. 30

S21
S23
S25
32A
S11
S13
S15
VA
VB
VC
31A
S24
31B
S26
31C
S22
S14
LS2
S16
LS3
S12
32B
SECTOR 4b' : [t10, t11)

**INTERNATIONAL SEARCH REPORT**

International application No. **PCT/JP2024/011531**

**A. CLASSIFICATION OF SUBJECT MATTER**

***H02M 7/12***(2006.01)i
FI: H02M7/12 F; H02M7/12 A

According to International Patent Classification (IPC) or to both national classification and IPC

**B. FIELDS SEARCHED**

Minimum documentation searched (classification system followed by classification symbols)

H02M7/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-005462 A (MYWAY CORP.) 09 January 2020 (2020-01-09) paragraphs [0028]-[0130], fig. 1-20 | 1-9 |
| A | JP 2017-528102 A (INESC TEC - INSTITUTO DE ENGENHARIA DE SISTEMAS E COMPUTADORES, TECNOLOGIA E CIENCIA) 21 September 2017 (2017-09-21) paragraphs [0034]-[0081], fig. 1-17 | 1-9 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/011531**

| Patent document cited in search report | Publication date (day/month/year) | Patent family member(s) | Publication date (day/month/year) |
|---|---|---|---|
| JP 2020-005462 A | 09 January 2020 | (Family: none) | |
| JP 2017-528102 A | 21 September 2017 | US 2017/0229972 A1 paragraphs [0045]-[0111], fig. 1-17<br>EP 3180849 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20180262103